# EUROPEAN PATENT APPLICATION

(11) **EP 4 664 797 A1**
(43) Date of publication of application: **17.12.2025**
(21) Application number: 23928051.4
(22) Date of filing: 22.03.2023
(51) Int. Cl.: H04B 17/382

(54) **CHANNEL OPERATION METHOD AND APPARATUS, COMMUNICATION DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); ZHOU, Pei, Dongguan, Guangdong 523860 (CN); LUO, Chaoming, Dongguan, Guangdong 523860 (CN); LI, Yapu, Dongguan, Guangdong 523860 (CN)
(74) Representative: Grassi, Stefano
(86) International application number: PCT/CN2023/083205
(87) International publication number: WO 2024/192738

(57) **Abstract**

A channel operation method and apparatus, a communication device, and a storage medium, relating to the technical field of wireless communications. The method is executed by a first device, the method comprising: receiving a dynamic sub-channel operation (DSO) mode management frame sent by a second device (401). The DSO mode management frame is used for indicating that a DSO mode between the first device and the second device is an enabling mode or a non-enabling mode. The enabling mode is a mode in which target devices are allowed to perform frame exchange by means of a DSO method according to a first parameter set. The first parameter set is indicated by the DSO mode management frame, and the first parameter set comprises at least one of a channel bandwidth and a supported maximum spatial stream.

## Description

### TECHNICAL FIELD

The present disclosure relates to the technical field of wireless communication, and in particular, to a channel operation method and apparatus, a communication device and a storage medium.

### BACKGROUND

In a Wireless Local Area Network (WLAN), in the process of communication between an Access Point AP device and a non-AP device, a subchannel (or subband) between the two devices may be switched dynamically.

In the prior art, for example, the AP device communicates with a certain non-AP device on a primary channel, when a Transmission Opportunity (TXOP) on the secondary channel is obtained by the AP device through competing, the non-AP device may be instructed to switch to the secondary channel, and after the TXOP ends, the non-AP device is switched back to the primary channel.

### SUMMARY

Embodiments of the present disclosure provide a channel operation method and apparatus, a communication device and a storage medium. The technical solutions are as follows.

In one aspect, the embodiments of the present disclosure provide a channel operation method. The method is performed by the first device. The method includes the following operation.

A Dynamic subchannel Operation (DSO) mode management frame sent by the second device is received.

The DSO mode management frame is used for indicating that a DSO mode between the first device and the second device is an enabled mode or a disabled mode. The enabled mode is a mode that allows a target device to perform frame exchange according to the first parameter set in a DSO manner. The first parameter set is indicated by the DSO mode management frame. The first parameter set includes at least one of a channel bandwidth or the maximum supported spatial streams.

**In** one aspect, the embodiments of the present disclosure provide a channel operation method. The method is performed by the second device. The method includes the following operation.

A Dynamic subchannel Operation (DSO) mode management frame is sent to the first device.

The DSO mode management frame is used for indicating that a DSO mode between the first device and the second device is an enabled mode or a disabled mode. The enabled mode is a mode that allows a target device to perform frame exchange according to the first parameter set in a DSO manner. The first parameter set is indicated by the DSO mode management frame. The first parameter set includes at least one of a channel bandwidth or the maximum supported spatial streams.

**In** one aspect, the embodiments of the present disclosure provide a channel operation apparatus. The apparatus includes a receiving module.

The receiving module is configured to receive a Dynamic subchannel Operation (DSO) mode management frame sent by the second device.

The DSO mode management frame is used for indicating that a DSO mode between the first device and the second device is an enabled mode or a disabled mode. The enabled mode is a mode that allows a target device to perform frame exchange according to the first parameter set in a DSO manner. The first parameter set is indicated by the DSO mode management frame. The first parameter set includes at least one of a channel bandwidth or the maximum supported spatial streams.

In one aspect, the embodiments of the present disclosure provide a channel operation apparatus. The apparatus includes a sending module.

The sending module is configured to send a Dynamic subchannel Operation (DSO) mode management frame to the first device.

The DSO mode management frame is used for indicating that a DSO mode between the first device and the second device is an enabled mode or a disabled mode. The enabled mode is a mode that allows a target device to perform frame exchange according to the first parameter set in a DSO mode. The first parameter set is indicated by the DSO mode management frame. The first parameter set includes at least one of a channel bandwidth or the maximum supported spatial streams.

In another aspect, the embodiments of the present disclosure provide a communication device. The communication device is a multi-link device. The communication device includes a processor, a memory and a transceiver. The memory is configured to store a computer program. The computer program is executed by the processor to implement the channel operation method described above.

In yet another aspect, the embodiments of the present disclosure further provide a computer readable storage medium. The computer readable storage medium stores a computer program, and the computer program is loaded and executed by a processor to implement the channel operation method described above.

In another aspect, a computer program product is provided. The computer program includes computer instructions stored in a computer readable storage medium. A processor of a communication device reads the computer instructions from the computer readable storage medium, and the processor executes the computer instructions to cause the communication device to perform the channel operation method described above.

In another aspect, a chip is provided. The chip includes a programmable logic circuit and/or program instructions. The chip is used for running in a communication device to cause the communication device to perform the channel operation method described above.

In another aspect, a computer program is provided. The computer program is executed by a processor of a communication device to implement the channel operation method described above.

The technical solutions provided by the embodiments of the present disclosure can bring the following beneficial effects.

The first device supporting the DSO may receive a DSO mode management frame sent by the second device to negotiate whether a mode in which a target device of the two devices performs the frame exchange according to the first parameter set in the DSO manner is allowed. The first parameter set includes at least one of a channel bandwidth or the maximum supported spatial streams. Meanwhile, the DSO mode management frame is further used for indicating the first parameter set for performing the frame exchange in the DSO manner. The above solution provides a mechanism for negotiating the DSO, which can control a channel bandwidth and/or the maximum supported spatial streams for the frame exchange between the first device and the second device based on the DSO, thereby improving the flexibility of the DSO mechanism, and further improving the communication effect for frame exchange based on the DSO.

### BRIEF DESCRIPTION OF THE DRAWINGS

In order to more clearly explain the technical solutions in the embodiments of the present disclosure, the accompanying drawings that need to be used in the description of the embodiments will be briefly introduced below. It is apparent that the accompanying drawings in the following description are only some embodiments of the present disclosure, and for those skilled in the art, other accompanying drawings may be obtained from these accompanying drawings without making creative efforts.
FIG. 1 is a schematic diagram of a network architecture of a communication system according to an embodiment of the present disclosure.
FIG. 2 is a diagram of an individual target wake time (TWT) parameter set field format involved in the present disclosure.
FIG. 3 is a schematic diagram of DSO control involved in the present disclosure.
FIG. 4 is a flowchart of a channel operation method according to an embodiment of the present disclosure.
FIG. 5 is a flowchart of a channel operation method according to an embodiment of the present disclosure.
FIG. 6 is a flowchart of a channel operation method according to an embodiment of the present disclosure.
FIG. 7 is a schematic diagram of a DSO mode control field format involved in the embodiment illustrated in FIG. 6.
FIG. 8 is a diagram of a definition of an operation mode parameter update field involved in the embodiment illustrated in FIG. 6.
FIG. 9 is a diagram of a definition of an operation mode parameter update control subfield involved in the embodiment illustrated in FIG. 6.
FIG. 10 is a diagram of a definition of an operation mode parameter update field of mode 1 (or mode 2) involved in the embodiment illustrated in FIG. 6.
FIG. 11 is a schematic diagram of a DSO parameter update field format involved in the embodiment illustrated in FIG. 6.
FIG. 12 is a schematic diagram of DSO mode switching based on a notification frame involved in the embodiment illustrated in FIG. 6.
FIG. 13 is a schematic diagram of DSO parameter update based on a notification frame involved in the embodiment illustrated in FIG. 6.
FIG. 14 is a schematic diagram of negotiation of DSO switching based on a request/response frame involved in the embodiment illustrated in FIG. 6.
FIG. 15 is a schematic diagram of negotiation of DSO parameter update based on a request/response frame involved in the embodiment illustrated in FIG. 6.
FIG. 16 is a block diagram of a channel operation apparatus according to an embodiment of the present disclosure.
FIG. 17 is a block diagram of a channel operation apparatus according to an embodiment of the present disclosure.
FIG. 18 is a schematic structural diagram of a communication device according to an embodiment of the present disclosure.

### DETAILED DESCRIPTION

In order to clarify the object, technical solutions, and advantages of the present disclosure, the embodiments of the present disclosure will be described in further detail below with reference to the accompanying drawings.

The network architecture and service scenarios described in the embodiments of the present disclosure are used for more clearly describing the technical solutions of the embodiments of the present disclosure, and do not constitute a limitation on the technical solutions provided by the embodiments of the present disclosure. Those skilled in the art will know that with the evolution of the network architecture and the emergence of new service scenarios, the technical solutions provided by the embodiments of the present disclosure are equally applicable to similar technical problems.

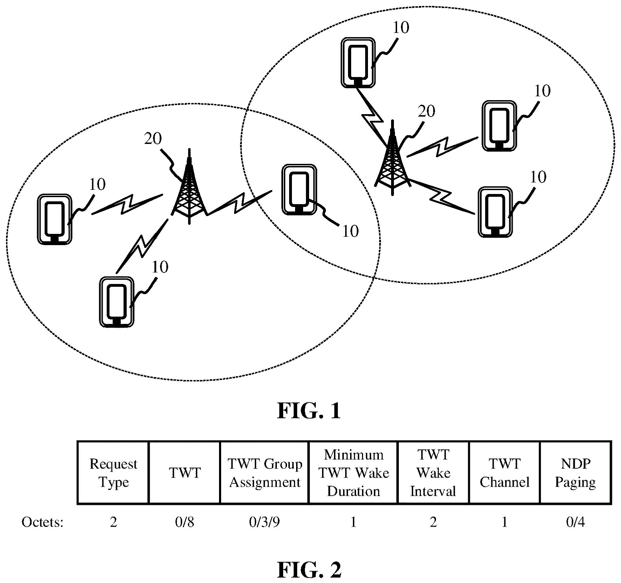

FIG. 1 illustrates a schematic diagram of a network architecture of a communication system according to an embodiment of the present disclosure. The network architecture may include Stations (STAs) 10 and Access Points (APs) 20.

The number of STAs 10 is typically multiple, and each AP 20 may be associated with one or more STAs 10. The STA 10 may include various devices with wireless communication capabilities, such as a handheld device, a vehicle-mounted device, a wearable device, a computing device, or other processing devices connected to wireless modems, and various forms of User Equipment (UE), mobile stations (MSs), terminal devices, and the like. For convenience of description, in the embodiments of the present disclosure, the above-mentioned devices are collectively referred to as STAs.

The AP 20 is a device deployed in an access network to provide wireless communication functions for the STA 10, which may be referred to as an Access Point. The AP 20 may include various forms of wireless routers, wireless switches, or wireless relay devices, and the like.

The above STA 10 and/or AP 20 may be a multi-link device.

Alternatively, it is not illustrated in FIG. 1 that the above network architecture further includes other network devices, such as gateway devices and the like.

The STA 10 and the AP 20 may be associated and communicated by wireless local area network technology, for example, the communication is performed based on the IEEE 802.11 protocol.

The IEEE 802.11 BF Working Group is discussing developing protocols specifying how to implement WLAN sensing by using WLAN signals compliant with the IEEE 802.11 protocol. WLAN terminals participating in sensing may have roles such as sensing initiator, sensing responder, sensing transmitter, sensing receiver, etc.

The WLAN sensing session includes one or more of the following phases: session establishment, sensing measurement, sensing report, session termination. The WLAN terminal may have one or more roles in the sensing session, for example, the sensing initiator may only be the sensing initiator, may also be the sensing transmitter, may also be the sensing receiver, or may be both the sensing transmitter and the sensing receiver.

Before introducing the technical solutions of the present disclosure, some technical knowledge involved in the present disclosure will be introduced and described.

### 1) High Efficiency Subchannel Selective Transmission (HE SST) operation

The HE SST non-AP STA and the HE SST AP establish a subchannel selective transmission (SST) by negotiating a trigger-enabled Target Wake Time (TWT).

The TWT request may have a TWT Channel field with up to one bit set to 1 to indicate the secondary channel requested to contain the RU allocations addressed to the HE SST non-AP STA that is a 20 MHz operating STA.

The TWT request may have a TWT Channel field with all 4 Least Significant Bits (LSBs) or all 4 Most Significant Bits (MSBs) set to 1 to indicate whether the primary 80 MHz channel or the secondary 80 MHz channel is requested to contain the RU allocations addressed to the HE SST non-AP STA that is an 80 MHz operating STA.

The TWT response shall have a TWT Channel field with up to one bit set to 1 to indicate the secondary channel that will contain the RU allocations addressed to the HE SST non-AP STA that is a 20 MHz operating STA.

The TWT response shall have a TWT Channel field with all 4 LSBs or all 4 MSBs set to 1 to indicate whether the primary 80 MHz channel or the secondary 80 MHz channel will contain the RU allocations addressed to the HE SST non-AP STA that is a 80 MHz operating STA.

FIG. 2 illustrates a diagram of an individual TWT parameter set field format involved in the present disclosure. An Individual TWT Parameter Set field in a TWT Parameter Information field of a TWT element includes a TWT Channel field.

The TWT Channel field includes a bitmap, which provides information of a temporary channel negotiated by a STA for use during a TWT Service Period (SP). Each bit in the bitmap corresponds to a channel with minimum width within the current operating band of the Basic Service Set (BSS) associated with the TWT response STA. The least significant bit corresponds to the channel with the lowest number among the operating channel of the BSS. In the HE BSS, the channel with minimum width is equal to 20 MHz. Setting one position in the bitmap sent by the TWT request STA to 1 means requesting an operation of taking the channel corresponding to the position as a temporary channel during the TWT SP. Setting one position in the bitmap sent by the TWT response STA to 1 means that the channel corresponding to the position is allowed to operate as a temporary channel during the TWT SP.

If the HE SST AP causes the operating channel or channel bandwidth to change, and if any of the secondary channels for the trigger-enabled TWT is not within the new operating channel or channel bandwidth, the HE SST AP and the HE SST non-AP STA implicitly terminate the trigger-enabled TWT.

The HE SST AP performs the frames exchange with the HE SST non-AP STA during the trigger-enabled TWT SP, and the operation follows the rules specified in the Individual TWT agreement, and the AP needs to ensure that:
the Downlink (DL) Multi-User (MU) physical layer protocol data unit (PPDU) addressed to HE SST non-AP STA and the individually addressed RU allocated in the trigger frame are located within the sub-channel indicated in the TWT Channel field of the TWT response;
the trigger-enabled TWT SP does not overlap with the Target Beacon Transmission Time (TBTT) of a Delivery Traffic Indication Message (DTIM) beacon frame; and
the same subchannel is used for all trigger-enabled TWT SPs, overlapping in time, of the same HE SST non-AP STA.

The HE SST non-AP STA performs the frame exchange with the HE SST AP during the trigger-enabled TWT SP, the operation follows the rules specified in the Individual TWT agreement, and the non-AP STA needs to ensure that:
at the TWT start time, the STA shall be available in the subchannel indicated in the TWT Channel field of the TWT response;
the Distributed Coordination Function (DCF) or the Enhanced Distributed Channel Access Function (EDCAF) cannot be used in the subchannel to access the medium; and
a trigger frame sent to it should not be responded unless it has performed a Clear Channel Assessment (CCA) until it detects a frame that its Network Allocation Vector (NAV) can be set, or until a period equals NAVSyncDelay occurs, whichever is earlier.

If a PPDU is received in a subchannel, the NAV should be updated according to the provision of "Updating two NAVs" in HE channel access.

The HE SST non-AP STA may include a Channel Switch Timing element in the (re) association request frame that is sent to the HE SST AP by the HE SST non-AP STA, to indicate the time required for the STA to switch among different subchannels. The received channel switching time notifies the HE SST AP of the duration that the HE SST non-AP STA may not be available to receive the frame before the TWT start time and after the end of the trigger-enabled TWT SP.

### 2) Dynamic Subband operation

IEEE 802.11-22/2204r0 proposes Dynamic Subband Operation, which allows a 320 MHz AP to dynamically indicate a Tx/Rx opportunity on a secondary 160 MHz to a 160 MHz non-AP, which may also be extended to any bandwidth combination of the AP/non-AP STA in which the bandwidth supported by the AP is higher than the bandwidth supported by the non-AP STA. Within each dynamically allocated opportunity, the operation may be either a Downlink (DL) transmission or a trigger-based Uplink (UL) transmission.

The Dynamic Subband Operation may enable the AP to dynamically utilize the secondary 160 MHz bandwidth on the TXOP when winning channel access on the secondary 160 MHz channel.

The AP may dynamically decide, based on the bandwidth availability, the channel condition, and the QoS requirement, whether to allocate bandwidth to the non-AP STAs on the primary 160 MHz or the secondary 160 MHz and which non-AP STAs are allocated in this manner.

The Dynamic Subband Operation mainly includes: when the acquisition of TXOP on the 320MHz bandwidth starts, the AP sends an indication to the non-AP STA supporting the DSO to require the non-AP STA to switch to the secondary 160MHz for the TXOP, and then continues to perform the frame exchange on the secondary 160MHz.

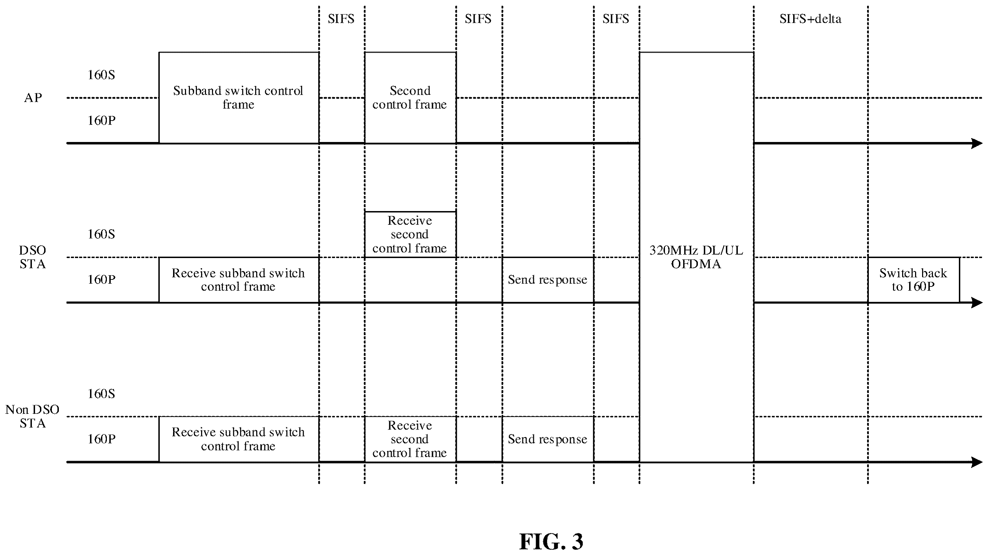

FIG. 3 illustrates a schematic diagram of DSO control involved in the present disclosure. AP sends to the DSO non-AP being scheduled, a "subband-switch control frame", which is a special initial control frame (could be a modified MU-RTS or BSRP or a newly defined frame) that indicates transition to the second 160MHz.

The subband-switch control frame has sufficient padding to cover the subband switching delay (i.e., the delay required for the non-AP STA to switch from the primary 160 MHz to the secondary 160 MHz). At the end of the TXOP (for example, the end of the TXOP is detected by the time interval of SIFS + delta time), and the DSO non-AP switches back to the primary 160 MHz for operation.

### 3) Operation Mode Indication (OMI)

OMI is a procedure used between an OMI initiator and an OMI responder.

An HE STA that transmits a frame including an OM Control subfield is defined as an OMI initiator. An HE STA with dot11OMIOptionImplemented equal to true that receives a frame including an OM Control subfield is defined as an OMI responder.

An OMI initiator may send to an OMI responder an individually addressed QoS Data, QoS Null, or Class 3 Management frame after association that contains the OM Control subfield and that solicits an immediate acknowledgment to indicate a change in its receive operating mode (ROM) and/or transmit operating parameters (TOM). An OMI responder implements the reception of an individually addressed QoS Data, QoS Null, or Class 3 Management frame that contains the OM Control subfield that indicates a change in ROM and/or TOM parameters.

As shown in Table 1 described below, the Control Information subfield in an OM Control subfield contains information related to the operating mode (OM) change of the STA transmitting the frame containing this information.

**Table 1**

| | | | | | | |
|---|---|---|---|---|---|---|
| Rx Number of spatial streams (Rx NSS) | Channel bandwidth (Channel Width) | UL MU Disable | Transmission Number of Space-Time Streams (Tx NSTS) | Extended subband width prohibition (ER SU Disable) | Downlink multi-user multi-input multi-output resound recommendation (DL MU-MIMO Resound Recommendation) | UL MU Data Disable |

As shown in Table 2 below, the Control Information subfield in an extremely high throughput (EHT) OM Control subfield contains information related to the OM changes for bandwidth of 320 MHz, Tx NSTS extension, and Rx NSS extension for the STA transmitting the frame containing this information .

**Table 2**

| | | | |
|---|---|---|---|
| Rx NSS extension | Channel Width extension | Tx NSTS extension | Reserved |

The HE SST operation currently defined in IEEE 802.11 ax is based on Individual TWT, that is, a non-AP STA performing the HE SST operation needs to negotiate and establish an Individual TWT protocol with an AP firstly, and then the AP and the non-AP STA perform the frame exchange in a SST manner during a scheduled trigger-enabled TWT SP. The main problem of the HE SST operation is that the SP needs to be scheduled in advance and dynamicity is lacking, which includes:
1) during the pre-scheduled semi-static SP, there is no guarantee that the AP will win the channel access opportunity on the secondary channel, and if the AP cannot win the channel access opportunity in the secondary channel, the advantages of the SST operation will be difficult to reflect; and
2) if the AP may win the access opportunity on a secondary channel outside the semi-static SP, any SST non-AP STA cannot be scheduled for the SST operation.

Dynamic Subband Operation allows the AP to dynamically instruct a non-AP STA supporting the DSO to perform the frame exchange on a designated secondary channel during TXOP after acquiring a TXOP on the secondary channel. Although the DSO method improves dynamicity, it lacks a mechanism for negotiating the DSO between the AP and the non-AP STA. Without negotiation, it is difficult to ensure whether the non-AP STA is suitable for the DSO operation. For example, how to ensure the execution of the DSO operation or reflect the advantages of the DSO operation is subject to the communication behavior requirements of the non-AP STA itself, whether the channel conditions (such as RSSI) of the non-AP STA in the secondary channel are suitable for frame exchange in the secondary channel, and the QoS parameter requirements of the non-AP STA. In addition, the operation mode and related operation parameters (such as operating channel and bandwidth, the supported number of transmission or reception spatial streams, MCS, etc.) of the STA are difficult to be dynamically adjusted according to the power saving requirements and/or frame exchange requirements of the STA.

In view of the lack of dynamicity in HE SST operation and the lack of negotiation and operation management mechanism between the AP and the non-AP STA in the currently proposed dynamic subband method, the present disclosure proposes a Dynamic subchannel (or subband) Operation (DSO) mode management method.

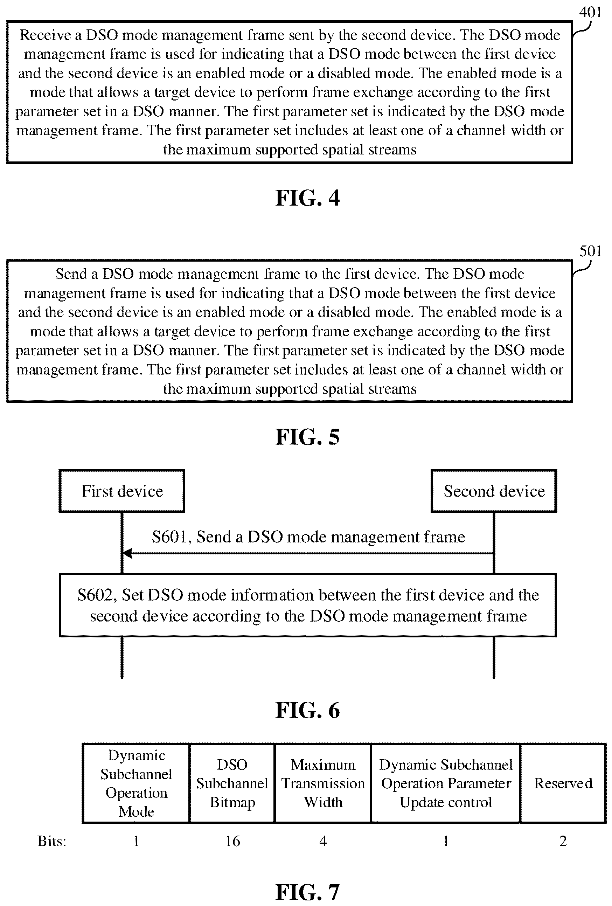

FIG. 4 illustrates a flowchart of a channel operation method according to an embodiment of the present disclosure. The method may be performed by the first device. The first device may be a STA 10 or an AP 20 in the network architecture illustrated in FIG. 1. The method may include the following operation.

In the operation 401, a Dynamic subchannel Operation (DSO) mode management frame sent by the second device is received. The DSO mode management frame is used for indicating that a DSO mode between the first device and the second device is an enabled mode or a disabled mode. The enabled mode is a mode that allows a target device to perform frame exchange according to the first parameter set in a DSO manner. The first parameter set is indicated by the DSO mode management frame. The first parameter set includes at least one of a channel bandwidth or the maximum supported spatial streams.

In summary, according to the solution shown in the embodiment of the present disclosure, the first device supporting the DSO may receive a DSO mode management frame sent by the second device to negotiate whether a mode in which a target device of the two devices performs the frame exchange according to the first parameter set in the DSO manner is allowed. The first parameter set includes at least one of a channel bandwidth or the maximum supported spatial streams. Meanwhile, the DSO mode management frame is further used for indicating the first parameter set for performing the frame exchange in the DSO manner. The above solution provides a mechanism for negotiating the DSO, which can control a channel bandwidth and/or the maximum supported spatial streams for the frame exchange between the first device and the second device based on the DSO, thereby improving the flexibility of the DSO mechanism, and further improving the communication effect for frame exchange based on the DSO.

FIG. 5 illustrates a flowchart of a channel operation method according to an embodiment of the present disclosure. The method may be performed by the second device. The second device may be a STA 10 or an AP 20 in the network architecture illustrated in FIG. 1. The method may include the following operation.

In the operation 501, a DSO mode management frame is sent to the first device. The DSO mode management frame is used for indicating that a DSO mode between the first device and the second device is an enabled mode or a disabled mode. The enabled mode is a mode that allows a target device to perform frame exchange according to the first parameter set in a DSO manner. The first parameter set is indicated by the DSO mode management frame. The first parameter set includes at least one of a channel bandwidth or the maximum supported spatial streams.

In summary, according to the solution shown in the embodiment of the present disclosure, the second device supporting the DSO may sent a DSO mode management frame to the first device to negotiate whether a mode in which a target device of the two devices performs the frame exchange according to the first parameter set in the DSO manner is allowed. The first parameter set includes at least one of a channel bandwidth or the maximum supported spatial streams. In addition, the DSO mode management frame is further used for indicating the first parameter set for performing the frame exchange in the DSO manner. The above solution provides a mechanism for negotiating the DSO, which can control a channel bandwidth and/or the maximum supported spatial streams for the frame exchange between the first device and the second device based on the DSO, thereby improving the flexibility of the DSO mechanism, and further improving the communication effect for frame exchange based on the DSO.

FIG. 6 illustrates a flowchart of a channel operation method according to an embodiment of the present disclosure. The method may be performed interactively by the first device and the second device. The first device and the second device may be a STA 10 or an AP 20, respectively, in the network architecture illustrated in FIG. 1. The method may include the following operations.

In the operation 601, the second device sends a DSO mode management frame to the first device. The first device receives the DSO mode management frame.

The DSO mode management frame is used for indicating that a DSO mode between the first device and the second device is an enabled mode or a disabled mode. The enabled mode is a mode that allows a target device to perform frame exchange according to the first parameter set in a DSO manner. The first parameter set is indicated by the DSO mode management frame. The first parameter set includes at least one of a channel bandwidth or the maximum supported spatial streams.

In some embodiments, the above target device above is one or both of the first device and the second device.

The first device may be an AP device, and the second device may be a non-AP device, or the first device may be a non-AP device, and the second device may be an AP device.

The above target device may be an AP device, or the above target device may be a non-AP device, or the above target device may be an AP device and a non-AP device.

The above solution extends the influence range of the enabled mode to the AP device and/or the non-AP device, improves the influence range of the enabled mode, and further improves the flexibility of the DSO mechanism.

In some embodiments, the above disabled mode is a mode that does not allow the target device to perform the frame exchange in the DSO manner, or the disabled mode is a mode that does not allow the target device to perform the frame exchange according to the first parameter set in the DSO manner.

In the above disabled mode, the target device cannot perform the frame exchange in the DSO manner. For example, taking the target device being a non-AP device as an example, in a case that the non-AP device is in the disabled mode and the AP device obtains the TXOP by competing, the non-AP device is not instructed to perform the frame exchange after switching the subchannel in the DSO mode, for example, the AP device does not send a DSO initial control frame to the non-AP device.

Alternatively, in the above disabled mode, the target device cannot perform the frame exchange based on the first parameter set in the DSO manner. Alternatively, the target device may perform the frame exchange according to a parameter set other than the first parameter set in the DSO method. For example, taking the target device being a non-AP device as an example, when the non-AP device is in the disabled mode, if the AP device obtains the TXOP by competing, the non-AP device may be instructed to switch to other sub-channel in the DSO manner according to actual requirement, and perform the frame exchange according to other parameter set other than the first parameter set.

In the above solution, by negotiating the disabled mode, it is avoided/restricted that the frame exchange is performed, in the DSO mode, between the AP device and/or the non-AP device in the disabled mode, and the timing and parameter set for performing the frame exchange between the first device and the second device based on the DSO may be controlled, thereby improving the flexibility of the DSO mechanism, and further improving the communication effect for the frame exchange based on the DSO.

In some embodiments, the operation mode of the STA supporting the DSO is classified as two modes: entering the DSO operation mode (that is, the enabled DSO operation mode) and exiting from the DSO operation mode (that is, the disabled DSO operation mode).

### 1) Enabled DSO operation mode

The STA dynamically uses the operation functions or capabilities corresponding to two subchannel (or subband) operation parameter sets (which are set as operation parameter set 1 and operation parameter set 2, the operation parameter set 1 being called the initial or default operation parameter set, and operation parameter set 2 being called the operation parameter set after the DSO operation switching) for operation. The operation function or capability (for example, the operation subchannel is a 20 MHz primary channel, the maximum bandwidth is 20 MHz, and one transmission spatial stream and one reception spatial stream are supported, etc.) corresponding to the operation parameter set 1 is used to perform the frame exchange during the monitoring operation or when operation switching is not performed. After the DSO operation switching indication is received and it is confirmed that the DSO operation switching is performed, the operation function or capability (for example, the operation subchannel includes a 20 MHz primary channel and one or more secondary channels, the maximum bandwidth is 80 MHz, and two transmission spatial streams and two reception spatial streams are supported, etc.) corresponding to the operation parameter set 2 is used for operation.

The parameters in the operation parameter set 1 may be explicitly indicated by the DSO operation mode management frame, or may use predetermined DSO operation mode initial or default operation parameters, such as operation parameters set by the latest Operating mode indication (OMI) before the DSO operation mode is enabled. The parameters in the operation parameter set 2 may be explicitly indicated by the DSO operation mode management frame, or may use the operation parameters corresponding to the supported regular operation capabilities indicated when being associated with the STA.

After the STA enables the DSO operation mode, the peer communication STA of the STA, after acquiring the TXOP, communicates with the STA, using the operation parameters supported by the operation parameter set 1 of the STA directly, or using the operation parameters supported by the operation parameter set 1 of the STA after instructing the STA to perform operation switching through the initial control frame and being confirmed by the STA, and the STA returns to the operation indicated by the operation parameter set 1 after the frame exchange is completed during the TXOP.

### 2) Disabled DSO operation mode

Communication between the AP and the non-AP STA can only be performed through the regular operating channel(s) (primary channel and/or partial secondary channels) of the non-AP STA and related parameters of the regular operation mode, and is not based on the secondary channel and/or primary channel configured or indicated by the DSO and related operation mode and related parameters. The regular operating channel(s) (primary channel and/or partial secondary channels) of the non-AP STA and the related parameters of the regular operation mode are indicated and set by the OMI process and/or the process of the non-AP STA associated with the AP.

In some embodiments, the negotiation or notification for the DSO operation manner may be initiated by a non-AP STA or an AP associated with the non-AP STA. The negotiation or notification includes one or more negotiation or notification contents: performing a transition of the DSO operation mode (i.e., transition from the enabled DSO operation mode to the disabled DSO operation mode, or transition from the disabled DSO operation mode to the enabled DSO operation mode) of a STA (for example, a non-AP STA), and/or setting or updating of DSO operation parameters (including a DSO subchannel/subband indication, a maximum transmission width, the number of supported transmission or reception spatial streams, and a switching delay between different operating subchannels/subbands required by the STA.

According to the above dynamic subchannel (or subband) operation (DSO) mode management method, it is ensured that the DSO operation can meet the communication behavior requirements of the AP and the non-AP STA, and meet the channel condition and the QoS parameter requirement of two devices (especially the non-AP STA) in the secondary channel.

In the operation 602, the first device and/or the second device sets DSO mode information between the first device and the second device according to the DSO mode management frame.

The DSO mode information includes at least one of: a DSO mode between the first device and the second device; an operating parameter for DSO control; or a parameter set for performing the frame exchange.

The above set DSO mode includes a disabled DSO mode and an enabled DSO operation mode.

The parameter set for performing the frame exchange may include the above first parameter set and/or the second parameter set for performing the frame exchange in a non-DSO manner.

For example, when the DSO mode indicated by the DSO mode management frame is the enabled DSO operation mode, the parameter set for performing the frame exchange may include the first parameter set, or may include the first parameter set and the second parameter set. When the DSO mode indicated by the DSO mode management frame is the disabled DSO operation mode, the parameter set for performing the frame exchange may include the second parameter set, or may include the first parameter set and the second parameter set.

The above set operation parameter for the DSO control may be a parameter for controlling a process in which the target device performs the frame exchange in the DSO manner.

In the above solution, after negotiation, the first device and/or the second device may locally set the DSO mode, the operation parameter for the DSO control, and/or the parameter set for performing the frame exchange, so that the timing and parameters for performing the frame exchange based on the DSO between the first device and the second device may be controlled by the DSO mode, the operation parameter for the DSO control, and/or the parameter set for performing the frame exchange subsequently.

The DSO mode management frame may be a DSO mode notification frame. Accordingly, the first device may return the DSO mode notification frame to the second device within a timeout duration after receiving the DSO mode notification frame.

When the DSO mode management frame is a DSO mode notification frame, the second device may set DSO mode information between the first device and the second device according to the DSO mode notification frame when the DSO mode notification frame returned by the first device is received within a timeout duration after the DSO mode notification frame is sent.

Alternatively, in a case that the DSO mode notification frame returned by the first device is not received within the timeout duration after the DSO mode notification frame is sent, the second device sets the DSO mode information between the first device and the second device according to the DSO mode notification frame after the timeout duration reached.

The above embodiment implements negotiation of the DSO mode and/or operating parameters for the DSO control by using a sending and returning mechanism of the notification frame, and provides an implementable solution for negotiating, between the AP device and the non-AP device, the DSO mode, the parameter for the DSO control, and/or the parameter set for performing the frame exchange. In the solution, the receiver does not need to judge whether to accept the DSO mode, the parameter for the DSO control and/or the parameter set for performing the frame exchange notified by the initiator, but only needs to set the DSO mode, the parameter for the DSO control and/or the parameter set for performing the frame exchange according to the information in the notification frame. Similarly, regardless of whether the initiator receives a returned notification frame, the initiator can directly set the DSO mode, the parameter for the DSO control, and/or the parameter set for performing the frame exchange. The implementation logic of the above process is simple and the negotiation efficiency is high.

In some embodiments, the DSO mode management frame may be a DSO mode request frame. The operation that the first device sets the DSO mode information between the first device and the second device according to the DSO mode management frame may include the following operation.

In a case of determining that the DSO mode information indicated by the DSO mode request frame is accepted, the DSO mode information between the first device and the second device is set according to the DSO mode request frame.

The method further includes the following operation. The first device returns the first DSO mode response frame to the second device. The first DSO mode response frame is used for indicating whether the DSO mode information indicated by the DSO mode request frame is accepted.

The first DSO mode response frame includes the first status code. The first status code is used for indicating whether the DSO mode information indicated by the DSO mode request frame is accepted.

When the DSO mode management frame is the DSO mode request frame, the operation that the second device sets the DSO mode between the first device and the second device according to the DSO mode management frame may include the following operation.

The first DSO mode response frame returned by the first device is received. The first DSO mode response frame is used for indicating whether the DSO mode information indicated by the DSO mode request frame is accepted.

In a case that the first DSO mode response frame is used for indicating that the DSO mode information indicated by the DSO mode request frame is accepted, the second device sets the DSO mode information between the first device and the second device according to the DSO mode request frame.

The above embodiment implements the negotiation of the DSO mode, the parameter for the DSO control, and/or the parameter set for performing the frame exchange by using a request and response mechanism of a request frame, and provides an implementable solution for negotiating, between the AP device and the non-AP device, the DSO mode, the parameter for the DSO control, and/or the parameter set for performing the frame exchange. In this solution, the receiver can independently decide whether to accept the DSO mode, the parameter for the DSO control, and/or the parameter set for performing the frame exchange notified by the initiator. In the above process, the setting flexibility of the negotiation process of the DSO mode, the parameter for the DSO control, and/or the parameter set for performing the frame exchange is higher, and the negotiation effect is better.

The method further includes the following operation. The first device sends, to the second device, the second DSO mode response frame that is not triggered by requesting. The second DSO mode response frame is used for indicating recommended DSO mode information.

In some embodiments, the second DSO mode response frame includes the second status code. The second status code is used for indicating that the second DSO mode response frame is used for recommending the DSO mode information.

The method further includes the following operation. The second device receives the second DSO mode response frame, sent by the first device, that is not triggered by requesting. The second DSO mode response frame is used for indicating DSO mode information.

Accordingly, the operation that the second device sends the DSO mode management frame to the first device includes the following operation.

The second device sends the DSO mode request frame to the first device according to the second DSO mode response frame.

In the above embodiment, in a case that the DSO mode, the parameter for the DSO control, and/or the parameter set for performing the frame exchange are negotiated by using the mechanism of request and response of the request frame, the receiver may recommend the DSO mode, the parameter for the DSO control, and/or the parameter set for performing the frame exchange to the requester in advance, so that the requester can determine to negotiate which DSO mode, the parameter for the DSO control, and/or the parameter set for performing the frame exchange, according to the recommendation of the receiver, thereby improving the success rate of negotiation of the DSO mode, the parameter for the DSO control, and/or the parameter set for performing the frame exchange, and improving negotiation efficiency.

In some embodiments, the DSO mode management frame includes at least one of a DSO mode control field, a DSO parameter update field, or an operation mode parameter update field.

The DSO mode control field is used for controlling the DSO mode between the first device and the second device. For example, the DSO mode control field is used for instructing the target device to enter the enabled DSO operation mode from the disabled DSO operation mode, or to instruct the target device to enter the disabled DSO operation mode from the enabled DSO operation mode.

The DSO parameter update field is used for updating an operating parameter for DSO control between the first device and the second device. For example, the operating parameter of the DSO control between the first device and the second device may be used for indicating the process or manner of the target device entering or exiting the DSO.

The operation mode parameter update field is used for updating a parameter set for performing the frame exchange between the first device and the second device. For example, the parameter set of the frame exchange between the first device and the second device may indicate information such as a channel bandwidth and maximum supported spatial streams when the first device and the second device perform the frame exchange based on a non-DSO manner or a DSO manner.

In some embodiments, the second DSO mode response frame includes at least one of a DSO mode control field, a DSO parameter update field, or an operation mode parameter update field.

The DSO mode control field is used for controlling the DSO mode between the first device and the second device.

The DSO parameter update field is used for updating an operating parameter for DSO control between the first device and the second device.

The operation mode parameter update field is used for updating a parameter set for performing the frame exchange between the first device and the second device.

The above embodiment defines the frame structure of the DSO mode management frame and the second DSO mode response frame, and the DSO mode, the operation parameter for the DSO control, and the parameter set for performing the frame exchange are carried through different information fields, thereby improving the flexibility of information carried in the DSO mode management frame and the second DSO mode response frame.

In some embodiments, the operation mode parameter update field includes at least one of an operation mode parameter update control subfield, the first operation mode update parameter subfield, or the second operation mode update parameter subfield.

The operation mode parameter update control subfield is used for indicating whether the first operation mode update parameter subfield and/or the second operation mode update parameter subfield exists. For example, the numerical value in the operation mode parameter update control subfield may indicate whether the first operation mode update parameter subfield and/or the second operation mode update parameter subfield exists in the DSO mode management frame.

The first operation mode update parameter subfield is used for indicating the first parameter set.

The second operation mode update parameter subfield is used for indicating the second parameter set. The second parameter set is a parameter set with which the frame exchange is performed between the first device and the second device through a non-DSO manner, and at least one of a channel bandwidth or maximum supported spatial streams in the first parameter set is different from that in the second parameter set.

In some embodiments, if the first parameter set and the second parameter set include other parameters in addition to the channel bandwidth and the maximum supported spatial streams, the first parameter set and the second parameter set may also be different in the other parameters. For example, the first parameter set and the second parameter set may further include a Modulation and Coding Scheme (MCS), and the MCS in the first parameter set may be different from the MCS in the second parameter set.

Here, the concept of the above non-DSO manner is different from that of the disabled DSO operation mode.

Here, the frame exchange in the non-DSO manner may refer to all or a part of manners for the frame exchange other than the frame exchange based on the DSO manner. For example, the frame exchange in the non-DSO manner may include the frame exchange of the first device and/or the second device in the disabled DSO operation mode. The above frame exchange in the non-DSO manner may further include that the frame exchange is performed when the first device and/or the second device is in the disabled DSO operation mode, and the first device and the second device perform the frame exchange through a regular subchannel other than the target subchannel. That is, the first device and/or the second device may be in the disabled DSO operation mode when performing frame exchange in the non-DSO manner.

The above disabled DSO operation mode refers to a mode in which the first device and/or the second device cannot perform the frame exchange in the DSO manner, that is, in the disabled DSO operation mode, the first device and/or the second device perform the frame exchange in the non-DSO manner.

In the above embodiment, the first parameter set and the second parameter set are set in different subfields, the sender may determine information is carried in which subfield or subfields according to the actual situation, and indicate the information through the operation mode parameter update control subfield, thereby improving the flexibility of the information carried in the operation mode parameter update field.

In some embodiments, the operation mode parameter update control subfield includes at least one of the first indication information and the second indication information.

The first indication information is used for indicating whether the first operation mode update parameter subfield exists.

The second indication information is used for indicating whether the second operation mode update parameter subfield exists.

In the above embodiment, whether the first operation mode update parameter subfield and the second operation mode update parameter subfield exist in the DSO mode management frame is indicated by two pieces of indication information, respectively, thereby improving the flexibility of indication of the operation mode update parameter subfield.

In some embodiments, the first operation mode update parameter subfield includes at least one of following information in the first parameter set: the channel bandwidth, maximum supported reception spatial streams, or maximum supported transmission spatial streams.

In some embodiments, the second operation mode update parameter subfield includes at least one of following information in the second parameter set: the channel bandwidth, maximum supported reception spatial streams, or maximum supported transmission spatial streams.

The above channel bandwidth may refer to a maximum bandwidth that may be occupied by the frame exchange between the first device and the second device.

The above maximum supported reception spatial streams refers to the maximum spatial streams that the first device and/or the second device can receive when the frame exchange is performed between the first device and the second device. The above maximum supported transmission spatial streams may refer to the maximum spatial streams that the first device and/or the second device can send when the frame exchange is performed between the first device and the second device.

Alternatively, the above first operation mode update parameter subfield and/or the second operation mode update parameter subfield may further include other parameters, such as MCS and the like.

In the above embodiments, the first operation mode update parameter subfield and the second operation mode update subfield may carry a channel bandwidth, the maximum supported reception and/or transmission spatial streams, thereby achieving a restriction for the channel bandwidth and/or the maximum spatial streams.

In some embodiments, the DSO mode control field includes at least one of a DSO mode subfield, a DSO subchannel bitmap subfield, a maximum transmission width subfield, a DSO parameter update control field, an operation mode parameter update indication subfield or an operation mode parameter update control subfield.

The DSO mode subfield is used for indicating a DSO mode to be switched.

The DSO subchannel bitmap subfield is used for indicating a target subchannel by a bitmap.

The maximum transmission width subfield is used for indicating a maximum physical layer protocol data unit (PPDU) bandwidth allowed for reception or transmission on the target subchannel.

The DSO parameter update control field is used for indicating whether the DSO parameter update field exists in a current frame.

The operation mode parameter update indication subfield is used for indicating whether a parameter set for performing the frame exchange between the first device and the second device is updated.

The operation mode parameter update control subfield is used for indicating whether the operation mode parameter update field exists.

The above embodiment defines the structure of the DSO mode control field, and information, such as the DSO mode to be switched, the target subchannel, the maximum width, whether to update the DSO parameter, whether to update the parameter set for performing the frame exchange, and whether updated operation mode parameter exists, is carried through different subfields, so that the flexibility of information carried in the DSO mode control field can be improved.

In some embodiments, in a case that a parameter value of the operation mode parameter update indication subfield is the first parameter value, the operation mode parameter update indication subfield indicates that the parameter set for performing the frame exchange between the first device and the second device is updated.

In a case that the parameter value of the operation mode parameter update indication subfield is the second parameter value, the operation mode parameter update indication subfield indicates that the parameter set for performing the frame exchange between the first device and the second device is not updated.

The first parameter value and the second parameter value may be one of 0 and 1, respectively, for example, the first parameter value may be 0 and the second parameter value may be 1, or the first parameter value may be 1, and the second parameter value may be 0.

In the above embodiment, whether the parameter set for performing the frame exchange is updated is indicated by different parameters, thereby reducing the requirement for signaling resources and improving negotiation efficiency.

In some embodiments, in a case that a parameter value of the operation mode parameter update control subfield is the third parameter value, the operation mode parameter update control subfield indicates that the operation mode parameter update field exists.

In a case that the parameter value of the operation mode parameter update control subfield is the fourth parameter value, the operation mode parameter update control subfield indicates that the operation mode parameter update field does not exist.

The third parameter value and the fourth parameter value may be one of 0 and 1, respectively, for example, the third parameter value may be 0 and the fourth parameter value may be 1, or the third parameter value may be 1, and the fourth parameter value may be 0.

In the above embodiment, whether the operation mode parameter update field exists is indicated by different parameters, thereby reducing the requirement for signaling resources and improving negotiation efficiency.

In some embodiments, in a case that a parameter value of the DSO mode subfield is the fifth parameter value, the DSO mode subfield indicates that the DSO mode to be switched is the enabled mode.

In a case that the parameter value of the DSO mode subfield is the sixth parameter value, the DSO mode subfield indicates that the DSO mode to be switched is the disabled mode.

The fifth parameter value and the sixth parameter value may be one of 0 and 1, respectively, for example, the fifth parameter value may be 0 and the sixth parameter value may be 1, or the fifth parameter value may be 1, and the sixth parameter value may be 0.

In the above embodiment, different DSO modes are indicated by different parameters, thereby reducing the requirement for signaling resources and improving negotiation efficiency.

In some embodiments, the DSO parameter update field includes at least one of a dynamic subchannel operation padding delay subfield and a dynamic subchannel operation transition delay subfield.

The dynamic subchannel operation padding delay subfield is used for indicating a minimum medium access control (MAC) padding duration of a channel switch indication frame. The channel switch indication frame is used for triggering the target device to switch to a target subchannel in the DSO manner for performing the frame exchange.

The dynamic subchannel operation transition delay subfield is used for indicating a transition delay of switching from the target subchannel to a regular subchannel.

The channel switch indication frame may include a channel switching control frame.

The above embodiment defines the format of the DSO parameter update field, and the padding duration of the channel switch indication frame and the delay for switching the subchannel are indicated, thereby improving the flexibility of instructing the target device to perform the frame exchange in the DSO manner through the channel switch indication frame.

In some embodiments, in a case that the DSO mode management frame is a DSO mode notification frame, the DSO parameter update field includes a transition timeout subfield.

The transition timeout subfield is used for indicating a timeout duration for the first device to return the DSO mode notification frame to the second device after receiving the DSO mode notification frame.

The above embodiment defines a case that negotiation is performed by a notification frame and a format of the DSO parameter update field. When the first device and the second device negotiate through a notification frame, the timeout duration for returning the DSO mode notification frame can be adjusted, thereby improving the flexibility of negotiation for the DSO mode and the operation parameter for DSO control.

In the embodiments of the present disclosure, the manners for the dynamic subshannel operation mode switching and/or parameter updating may include the following two manners.

### 1. The method for the dynamic subchannel operation mode switching and/or parameter updating based on a notification frame

When a STA supporting dynamic subchannel operation is ready to initiate (or an AP associated with the STA is ready to initiate) a dynamic subchannel operation mode switching or a dynamic subchannel operation parameter update of the STA, the STA sends a dynamic subchannel operation mode notification frame to the AP associated with the STA (or the AP associated with the STA sends the dynamic subchannel operation mode notification frame to the STA). When the value of the Dynamic Subchannel Operation Mode subfield is set to 1, it is indicated that the dynamic subchannel operation mode of the STA will be enabled, and when the value of the Dynamic Subchannel Operation Mode subfield is set to 0, it is indicated that the dynamic subchannel operation mode of the STA is disabled.

After receiving the dynamic subchannel operation mode notification frame sent by the STA (or the STA receives the dynamic subchannel operation mode notification frame sent by the AP), the AP sends, to the STA, a dynamic subchannel operation mode notification frame in which the dynamic subchannel operation mode control field and/or the dynamic subchannel operation parameter update field (if present) are set to the same values as the received dynamic subchannel operation mode control field and/or the dynamic subchannel operation parameter update field (if present), within the transition timeout duration indicated by the received dynamic subchannel operation transition timeout subfield.

When the STA initiates the dynamic subchannel operation mode switching or the dynamic subchannel operation parameter update, after the STA successfully sends the dynamic subchannel operation mode notification frame, the STA enters the operation mode (enabled or disabled dynamic subchannel operation mode) indicated by the Dynamic Subchannel Operation Mode subfield after the transition timeout duration indicated by the dynamic subchannel operation transition timeout subfield (which is carried by the STA in the capability field or capability element or in the dynamic subchannel operation parameter update field), or after the STA receives the dynamic subchannel operation mode notification frame sent by the AP. When the value of the Dynamic Subchannel Operation Mode subfield is 0, it is indicated that the dynamic subchannel operation mode will be exited or the dynamic subchannel operation mode will be not enabled. When the value of the Dynamic Subchannel Operation Mode subfield is 1, it is indicated that the dynamic subchannel operation mode will be entered or the dynamic subchannel operation mode will be enabled.

When the AP initiates the dynamic subchannel operation mode switching or the dynamic subchannel operation parameter update of the STA, after the STA receives the dynamic subchannel operation mode notification frame, the operation mode (enabled or disabled dynamic subchannel operation mode) indicated by the Dynamic Subchannel Operation Mode subfield is entered after the transition timeout duration indicated by the dynamic subchannel operation transition timeout subfield (which is carried by the STA in the capability field or capability element or in the dynamic subchannel operation parameter update field), or after the STA successfully sends the dynamic subchannel operation mode notification frame. When the value of the Dynamic Subchannel Operation Mode subfield is 0, it is indicated that the dynamic subchannel operation mode will be exited or the dynamic subchannel operation mode will be not enabled. When the value of the Dynamic Subchannel Operation Mode subfield is 1, it is indicated that the dynamic subchannel operation mode will be entered or the dynamic subchannel operation mode will be enabled.

If the STA enters (or enables) the dynamic subchannel operation mode through the interaction of the dynamic subchannel operation mode notification frame and the dynamic subchannel operation parameter update field exists in the dynamic subchannel operation mode notification frame, then, after the STA enters (or enabling) the dynamic subchannel operation mode:
(1) the STA communicates with the AP through an operation parameter of the mode 1 (or referred to be as default) when performing monitoring operation or the DSO operation switching is not performed; and
(2) when DSO-based communication is performed between the AP and the STA through the operation parameter of mode 2 (that is, after DSO operation switching is performed), the AP performs the DSO operation by using the supported channel indicated by the DSO Subchannel Bitmap, and the maximum bandwidth indicated by the Maximum Transmission Bandwidth (Maximum Transmission Width) field, or the channel bandwidth indicated by the operation mode parameter update field of mode 2, the number of supported transmission or reception spatial streams indicated by the operation mode parameter update field of mode 2, the minimum MAC padding duration indicated by the Dynamic Subchannel Operation Mode Padding Delay Subfield, and the transition delay indicated by the Dynamic Subchannel Operation Transition Delay.

### 2. The method for negotiating the dynamic subchannel operation mode and/or parameter update based on a request/response frame

When a STA supporting dynamic subchannel operation requests to initiate (or an AP associated with the STA requests to initiate) a dynamic subchannel operation mode switching or a dynamic subchannel operation parameter update of the STA, the STA sends a dynamic subchannel operation mode request frame to the AP associated with the STA (or the AP associated with the STA sends the dynamic subchannel operation mode request frame to the STA). In the dynamic subchannel operation mode request frame, when the value of the Dynamic Subchannel Operation Mode subfield is set to 1, it is indicated that the dynamic subchannel operation mode of the STA is requested to be enabled (i.e., entered or maintained), and when value of the Dynamic Subchannel Operation Mode subfield is set to 0, it is indicated that the dynamic subchannel operation mode of the STA is requested to be disabled (i.e., exited). The dynamic subchannel operation mode request frame may further include a DSO Subchannel Bitmap subfield for requesting the indicated DSO support channel, a Maximum Transmission Bandwidth (Maximum Transmission Width) subfield for requesting the indicated maximum bandwidth, a Dynamic Subchannel Operation Mode Padding Delay Subfield for requesting the indicated minimum MAC padding duration, and a Dynamic Subchannel Operation Transition Delay subfield for requesting the indicated transition delay.

After the AP receives the dynamic subchannel operation mode request frame sent by the STA (or the STA receives the dynamic subchannel operation mode request frame sent by the AP), the AP sends a dynamic subchannel operation mode response frame to respond to the corresponding dynamic subchannel operation mode request to accept or reject the corresponding dynamic subchannel operation mode switching request and/or requested updated dynamic subchannel operation parameter.

Furthermore, the AP or Non-AP STA may also send a dynamic subchannel operation mode response frame with a status code indicating "recommended dynamic subchannel operation" or send a QoS Null frame or other frame carrying a dynamic subchannel operation mode control subfield and/or a dynamic subchannel operation parameter update subfield in the HE variant HT Control field, to recommend the suggested dynamic subchannel operation mode (i.e., enabled or not-enabled dynamic subchannel operation mode) and/or dynamic subchannel operation parameter to the target STA.

The relevant fields and frames for the DSO negotiation or notification are defined as follows.

### 1) The dynamic subchannel operation mode control field format

FIG. 7 illustrates a schematic diagram of a DSO mode control field format according to an embodiment of the present disclosure.

As illustrated in FIG. 7, the Dynamic Subchannel Operation Mode subfield indicates an operation mode to be switched. When the value of the Dynamic Subchannel Operation Mode subfield is 0, it is indicated that the dynamic subchannel operation mode will be exited or the dynamic subchannel operation mode will be not enabled, and when value of the Dynamic Subchannel Operation Mode subfield is 1, it is indicated that the dynamic subchannel operation mode will be entered or the dynamic subchannel operation mode will be enabled.

The DSO Subchannel Bitmap subfield indicates a 16-bit bitmap that provides information of a temporary channel negotiated or notified by the STA for use during a DSO transmission (such as during the TXOP for initiating the DSO transmission). Each bit in the bitmap corresponds to a channel with minimum width within the operating band of the BSS associated with the STA. The least significant bit corresponds to the channel with the lowest number among the operating channel of the BSS. For example, in the HE BSS, EHT BSS, or UHR BSS, the channel with minimum width is equal to 20 MHz, then the bit with the lowest number corresponds to the 20 MHz subchannel located within the BSS bandwidth, which has the lowest frequency among all 20 MHz subchannel sets in the BSS bandwidth. Each sequential bit in the bitmap corresponds to a subchannel with a bandwidth being the minimum width (such as 20 MHz) of the next higher frequency. When the bit in the bitmap located within the BSS bandwidth is set to 1, it is indicated that the corresponding subchannel with a bandwidth being the minimum width (such as 20 MHz) is expected or allowed to operate as a temporary channel. When the bit in the bitmap located within the BSS bandwidth is set to 0, it is indicated that the corresponding subchannel with a bandwidth being the minimum width (such as 20 MHz) is not expected or allowed to operate as a temporary channel. Specifically, the all corresponding subchannels as temporary channels for which bits in the DSO subchannel bitmap subfield are set to 1 may be consecutive subchannels or non-consecutive subchannels. If transmission and reception are performed on several non-consecutive subchannels indicated by the DSO subchannel bitmap subfield at the same time, communication rule requirements based on a punctured Subchannel and/or a punctured PPDU need to be met.

The Maximum Transmission Bandwidth (Maximum Transmission Width) subfield indicates the maximum PPDU bandwidth that the STA is allowed to receive or transmit on the indicated channel. The indicated maximum PPDU bandwidth cannot exceed the maximum bandwidth supported by the STA.

The dynamic subchannel operation parameter update control subfield is used for indicating whether a dynamic subchannel operation parameter update field exists. When the dynamic subchannel operation parameter update control field is set to 1, it is indicated that the current management frame carrying the dynamic subchannel operation mode control field includes the dynamic subchannel operation parameter update field. When the dynamic subchannel operation parameter update control field is set to 0, it is indicated that the current management frame carrying the dynamic subchannel operation mode control field does not include the dynamic subchannel operation parameter update field.

The Operation Mode Updated subfield is used for indicating whether the channel bandwidth and/or the maximum supported reception/transmission spatial flow parameter are updated. For example, when the Operation Mode Updated subfield is set to 1, it is indicated that the channel bandwidth and/or the maximum supported reception/transmission spatial flow parameter are updated, and when the Operation Mode Updated subfield is set to 0, it is indicated that the channel bandwidth and/or the maximum supported reception/transmission spatial flow parameter are not updated.

The subfield of whether the operation mode parameter update presents is used for indicating whether the operation mode parameter update field exists. When the subfield of whether the operation mode parameter update presents is set to 1, it is indicated that the current management frame carrying the dynamic subchannel operation mode control field includes the operation mode parameter update field, and when the subfield of whether the operation mode parameter update presents is set to 0, it is indicated that the current management frame carrying the dynamic subchannel operation mode control field does not include the operation mode parameter update field.

### 2) Operation mode parameter update field format (that is, the above operation mode parameter update control subfield)

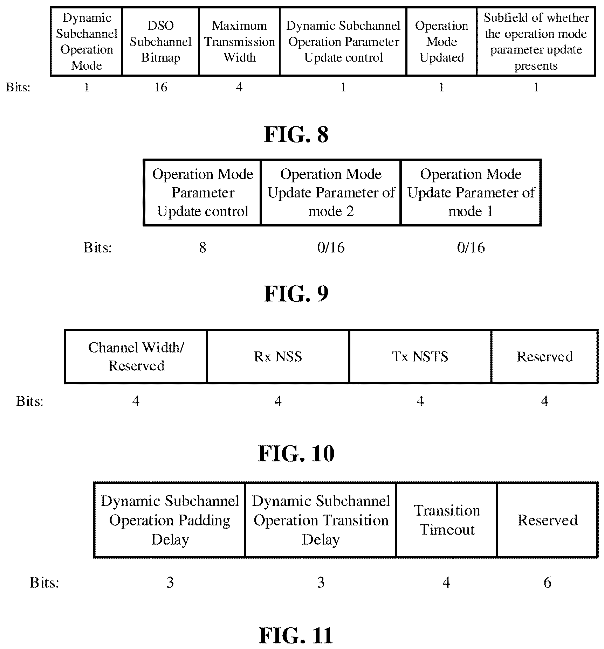

FIG. 8 illustrates a diagram of a definition of an operation mode parameter update field involved in an embodiment of the present disclosure.

FIG. 9 illustrates a diagram of a definition of an operation mode parameter update control subfield involved in the embodiment of the present disclosure.

The subfield of whether operation mode parameter update of mode 1 presents is used for indicating whether the operation mode parameter update field has an operation mode update parameter of mode 1. When the subfield of whether operation mode parameter update of mode 1 presents is set to 1, it is indicated that the operation mode parameter update field has an operation mode update parameter of mode 1, and when the subfield of whether operation mode parameter update of mode 1 presents is set to 0, it is indicated that the operation mode parameter update field does not have the operation mode update parameter of mode 1.

The subfield of whether operation mode parameter update of mode 2 presents is used for indicating whether the operation mode parameter update field has an operation mode update parameter of mode 2. When the subfield of whether operation mode parameter update of mode 2 presents sis set to 1, it is indicated that the operation mode parameter update field has an operation mode update parameter of mode 2, and when the subfield of whether operation mode parameter update of mode 2 presents is set to 0, it is indicated that the operation mode parameter update field does not have the operation mode update parameter of mode 2.

FIG. 10 illustrates a diagram of a definition of an operation mode parameter update field of mode 1 (or mode 2) involved in an embodiment of the present disclosure.

The channel bandwidth subfield indicates the operating channel bandwidth supported by the STA for reception and transmission. For example, the following encoding mode may be used: for the primary 20 MHz, the channel bandwidth subfield is set to 0, for the primary 40 MHz, the channel bandwidth subfield is set to 1, for the primary 80 MHz, the channel bandwidth subfield is set to 2, for 160MHz and 80 + 80MHz, the channel bandwidth subfield is set to 3, and for 320 MHz, the channel bandwidth subfield is set to 4. Specifically, for the operation mode parameter update field of mode 2, the channel bandwidth subfield in the operation mode parameter update field of mode 2 is reserved when the channel bandwidth of mode 2 is indicated by the maximum transmission width subfield (i.e. a non-zero value) of the dynamic subchannel operation mode control field.

Maximum supported reception spatial streams (Rx NSS): indicates the maximum number of spatial streams (NSS) supported for reception by the STA, and the Rx NSS is set to NSS-1. For example, if the operating channel bandwidth of the STA is greater than 80 MHz, the Rx NSS subfield indicates the maximum NSS of PPDU, with a bandwidth less than or equal to 80 MHz, supported for reception by the STA, and the Rx NSS is set to NSS-1. If the operating channel bandwidth of the STA is less than 80 MHz, the Rx NSS subfield indicates the maximum NSS supported for reception by the STA, and the Rx NSS is set to NSS-1.

Maximum supported transmission spatial streams (Tx NSTS) : indicates the maximum number of spatial streams (NSS) supported for transmission by the STA, and the Tx NSTS is set to NSS-1.

### 3) Dynamic subchannel operation mode parameter update field format:

FIG. 11 illustrates a schematic diagram of a DSO parameter update field format involved in an embodiment of the present disclosure.

The Dynamic Subchannel Operation Mode Padding Delay Subfield indicates a minimum MAC padding duration of a subchannel switching control frame, requested or notified by the STA, for indication of performing DSO subchannel switching. The minimum MAC padding duration is used for ensuring that the STA for performing the DSO operation has sufficient duration to switch between different subchannels for operation after receiving the DSO subchannel switching indication. When the dynamic subchannel operation mode padding delay subfield is carried in the management frame sent by the AP, the dynamic subchannel operation mode padding delay subfield is reserved. The definition of the dynamic subchannel operation mode padding delay subfield is shown in Table 3.

**Table 3**

| Dynamic Subchannel Operation Mode Padding Delay subfield | Dynamic Subchannel Operation Mode Padding Delay |
|---|---|
| 0 | 0 µs |
| 1 | 32 µs |
| 2 | 64 µs |
| 3 | 128 µs |
| 4 | 256 µs |
| 5-7 | Reserved |

The Dynamic Subchannel Operation Transition Delay Subfield indicates the transition delay required to switch from the frame exchange in the DSO subchannel to monitoring or transceiving operation in the regular subchannel. The definition of dynamic subchannel operation transition delay subfield is shown in Table 4.

**Table 4**

| Dynamic Subchannel Operation Transition Delay Subfield | Dynamic Subchannel Operation Transition Delay |
|---|---|
| 0 | 0 µ s |
| 1 | 16 µ s |
| 2 | 32 µ s |
| 3 | 64 µ s |
| 4 | 128 µ s |
| 5 | 256 µ s |
| 6-7 | Reserved |

The Transition Timeout Subfield indicates a timeout value for the dynamic subchannel operation mode notification frame exchange for the dynamic subchannel operation mode switching and/or dynamic subchannel operation parameter update, and the encoding is shown in Table 5.

**Table 5**

| Switch timeout subfield | Transition timeout |
|---|---|
| 0 | 0 TUs |
| 1 | 128 µ s |
| 2 | 256 µ s |
| 3 | 512 µ s |
| 4 | 1 TU |
| 5 | 2 TUs |
| 6 | 4 TUs |
| 7 | 8 TUs |
| 8 | 16 TUs |
| 9 | 32 TUs |
| 10 | 64 TUs |
| 11 | 128 TUs |
| 12-15 | Reserved |

### 4) Dynamic subchannel operation mode notification frame and request frame/response frame format

### (1) Dynamic Subchannel Operation Mode Notification Frame

The Dynamic Subchannel Operation Mode Notification frame is used for instructing the STA (initiator) that initiates transmission of the frame to change the dynamic subchannel operation mode. That is, the STA enters the dynamic subchannel operation mode or exits the dynamic subchannel operation mode.

The information contained in the Dynamic Subchannel Operation Mode Notification frame is shown in Table 6.

**Table 6**

| Order | Information |
|---|---|
| 1 | Category |
| 2 | Protected Action |
| 3 | Dialog Token |
| 4 | Dynamic subchannel operation mode control field |
| 5 | Operation mode Parameter Update Field (optional) |
| 6 | Dynamic subchannel operation parameter update field (optional) |

The Category field follows the relevant definition of the Action field in the IEEE 802.11 specification.

The Protected Action field follows the relevant definition of the Protected Action field in the IEEE 802.11 specification.

The Dialog Token field is set by the non-AP MLD to a non-zero value selected by the non-AP MLD, and is also set by the AP to the corresponding copy value from the received dynamic subchannel operation mode notification frame.

The definition of the Dynamic subchannel operation mode control field refers to the above "Dynamic subchannel operation mode control field format".

The definition of the Operation mode parameter update field refers to the above "Operation mode parameter update field format".

The definition of the Dynamic subchannel operation parameter update field refers to the above "Dynamic subchannel operation mode parameter update field format".

### (2) Dynamic Subchannel Operation Mode Request Frame

A STA (AP or non-AP STA) uses a dynamic subchannel operation mode request frame to negotiate a dynamic subchannel operation mode with the peer STA (corresponding non-AP STA and AP). The information contained in the action field of the dynamic subchannel operation mode request frame is shown in Table 7.

**Table 7**

| Order | Information |
|---|---|
| 1 | Category |
| 2 | Protected Action |
| 3 | Dialog Token |
| 4 | Dynamic subchannel operation mode control field |
| 5 | Operation mode Parameter update field (optional) |
| 6 | Dynamic subchannel operation parameter update field (optional) |

The Category field follows the relevant definition of the Action field in the IEEE 802.11 specification.

The Protected Action field follows the relevant definition of the Protected Action field in the IEEE 802.11 specification.

The Dialog Token field is set by the STA sending the dynamic subchannel operation mode request frame to a non-zero value selected by the STA, and is used for identifying the request/response event.

The definition of the Dynamic subchannel operation mode control field refers to "Dynamic subchannel operation mode control field format".

The definition of the Operation mode parameter update field refers to "Operation mode parameter update field format".

The definition of the Dynamic subchannel operation parameter update field refers to "Dynamic subchannel operation mode parameter update field format".

### (3) Dynamic subchannel operation mode response frame

The dynamic subchannel operation mode response frame is sent by the non-AP STA or AP to respond to the dynamic subchannel operation mode request frame to accept or reject the requested dynamic subchannel operation mode, or is sent by the non-AP STA or AP to suggest or recommend a dynamic subchannel operation mode. The information contained in the action field of the dynamic subchannel operation mode request frame is shown in Table 8.

**Table 8**

| Order | Information |
|---|---|
| 1 | Category |
| 2 | Protected Action |
| 3 | Dialog Token |
| 4 | Status Code |
| 5 | Dynamic subchannel operation mode control field (Optional) |
| 6 | Operation mode parameter update field (optional) |
| 7 | Dynamic subchannel operation parameter update field (optional) |

The Category field follows the relevant definition of the Action field in the IEEE 802.11 specification.

The Protected Action field follows the relevant definition of the Protected Action field in the IEEE 802.11 specification.

When the dynamic subchannel operation mode response frame is used to respond to a dynamic subchannel operation mode request frame, the value of the dialog token field is set to the value of the dialog token field of the corresponding dynamic subchannel operation mode request frame.

When the dynamic subchannel operation mode response frame is transmitted for an unrequested response, the value of the dialog token field may be set to 0.

The definition of the status code is shown in Table 9.

**Table 9**

| Status Code | First name | Meaning |
|---|---|---|
| 0 (or other specified value) | ACCEPT | Accept the request |
| 202 (or other specified value) | DENIED_DYNAMIC_SUBCHANNLE_ OPERATION | Reject request (because dynamic subchannel operation mode request cannot be accepted) |
| 203 (or other specified value) | PREFERRED_DYNAMIC_SUBCHANN LE_OPERATION | Recommended Dynamic Subchannel Operation Mode Suggestion |

When the dynamic subchannel operation mode response frame contains a dynamic subchannel operation mode control field, and/or an operation mode parameter update field, and/or a dynamic subchannel operation parameter update field, this response frame is used to recommend a suggested dynamic subchannel operation mode and/or dynamic subchannel operation parameter, a status code of the dynamic subchannel operation mode response frame is set to "203 or other specific value (PREFERRED_DYNAMIC_SUBCHANNLE_OPERATION)". Otherwise, the dynamic subchannel operation mode response frame does not contain a dynamic subchannel operation mode control field and a dynamic subchannel operation parameter, and/or an operation mode parameter update field, and/or a dynamic subchannel operation parameter update field.

The definition of the Dynamic subchannel operation mode control field refers to the definition of "Dynamic subchannel operation mode control field format".

The definition of the Operation mode parameter update field refers to above "Operation mode parameter update field format".

The definition of the dynamic subchannel operation parameter update field refers to the definition of "Dynamic subchannel operation mode parameter update field format".

In a case that the first device is a non-AP device and the second device is an AP device and a DSO mode between the first device and the second device is in an enabled mode, the first device further receives a channel switch indication frame sent by the second device, switches to the target subchannel indicated by the DSO mode management frame, and performs frame exchange with the second device according to the first parameter set. In some embodiments, after the frame exchange with the second device on the target subchannel according to the first parameter set is completed, the first device switches to the regular subchannel to perform frame exchange with the second device within the transition delay indicated by the DSO mode management frame.

Here, the regular subchannel may refer to a subchannel used by the AP device and the non-AP device when frame exchange is not performed based on the DSO manner, and for example, the regular subchannel may include a primary channel and/or a part of the secondary channels of the AP device.

Accordingly, in a case that the first device is a non-AP device and the second device is an AP device and the DSO mode between the first device and the second device is in an enabled mode, the second device sends a channel switch indication frame to the first device, and performs frame exchange with the first device on the target subchannel.

In some embodiments, when the first device is a non-AP device and the second device is an AP device, in a case that the DSO mode between the first device and the second device is in the disabled mode, or in a case that the DSO mode between the first device and the second device is in the enabled mode and the channel switch indication frame sent by the second device is not received, or in a case of switching to the regular subchannel after the frame exchange with the second device on the target subchannel according to the first parameter set is completed, the first device performs frame exchange with the second device according to the second parameter set indicated by the DSO mode management frame.

Accordingly, when the first device is a non-AP device and the second device is an AP device, in a case that the DSO mode between the first device and the second device is in the disabled mode, or in a case that the DSO mode between the first device and the second device is in the enabled mode and a channel switch indication frame is not sent to the second device, or in a case that the frame exchange with the second device on the target subchannel according to the first parameter set is completed, the second device performs frame exchange with the second device on the regular subchannel according to the second parameter set indicated by the DSO mode management frame.

In some embodiments, in a case that the first device is an AP device and the second device is a non-AP device and the DSO mode between the first device and the second device is in an enabled mode, the first device may send a channel switch indication frame to the second device, and perform the frame exchange with the second device on the target subchannel indicated by the DSO mode management frame according to the first parameter set.

Accordingly, in a case that the first device is an AP device and the second device is a non-AP device and the DSO mode between the first device and the second device is in an enabled mode, the second device receives a channel switch indication frame sent by the first device, and switches to the target subchannel indicated by the DSO mode management frame, and perform the frame exchange with the first device according to the first parameter set.

In some embodiments, in a case that the first device is an AP device and the second device is a non-AP device, the second device may switch to the regular subchannel and perform the frame exchange with the first device within the transition delay indicated by the DSO mode management frame after the frame exchange with the first device on the target subchannel according to the first parameter set is completed.

In some embodiments, in a case that the DSO mode between the first device and the second device is in the disabled mode, or in a case that the DSO mode between the first device and the second device is in the enabled mode and the channel switch indication frame is not sent to the second device, or in a case that the frame exchange with the second device according to the first parameter set on the target subchannel is completed, the first device performs the frame exchange with the second device according to the second parameter set indicated by the DSO mode management frame on the regular subchannel.

Accordingly, in some embodiments, in a case that the DSO mode between the first device and the second device is in the disabled mode, or in a case that the DSO mode between the first device and the second device is in the enabled mode and the channel switch indication frame sent by the second device is not received, or in a case of switching to the regular subchannel after the frame exchange with the second device according to the first parameter set on the target subchannel is completed, the second device performs the frame exchange with the first device on the regular subchannel according to the second parameter set indicated by the DSO mode management frame.

In the above embodiment, after obtaining the XTOP by competing on the target subchannel, the AP device may send a channel switch indication frame to the non-AP device based on the information indicated by the DSO mode management frame, and the non-AP device may perform the frame exchange based on the DSO manner according to the information indicated by the DSO mode management frame and the channel switch indication frame. According to the above solution, the behavior of the frame exchange based on the DSO manner between the first device and the second device is controlled by the DSO mode management frame, and the controllability of the timing and the parameter set for performing the frame exchange based on the DSO manner between the first device and the second device are guaranteed.

In some embodiments, a frame end of the channel switch indication frame includes a padding element. A duration corresponding to the padding element is not less than the minimum MAC padding duration indicated by the DSO mode management frame.

The MAC padding duration of the padding element may allow the non-AP device to initiate switching of the subchannel and the parameter set in the process of receiving the channel switch indication frame, so that there is sufficient time to switch to the target subchannel and parameter set before the end of the next inter-frame interval, thereby avoiding affecting the subsequent frame exchange process.

In some embodiments, a PPDU bandwidth in which the frame exchange is performed between the first device and the second device on the target subchannel is not greater than a maximum PPDU bandwidth indicated by a maximum transmission width subfield in the DSO mode management frame, or the PPDU bandwidth in which the frame exchange is performed between the first device and the second device on the target subchannel is not greater than the channel bandwidth in the first parameter set.

In some embodiments, spatial streams receiving when the frame exchange is performed between the first device and the second device on the target subchannel is not greater than maximum supported reception spatial streams in the first parameter set.

Spatial streams transmitted when the frame exchange is performed between the first device and the second device on the target subchannel is not greater than maximum supported transmission spatial streams in the first parameter set.

In some embodiments, a PPDU bandwidth in which the frame exchange is performed between the first device and the second device on the regular subchannel is not greater than a channel bandwidth in the second parameter set.

In some embodiments, spatial streams received when the frame exchange is performed between the first device and the second device on the regular subchannel is not greater than maximum supported reception spatial streams in the second parameter set.

Spatial streams transmitted when the frame exchange is performed between the first device and the second device on the regular subchannel is not greater than maximum supported transmission spatial streams in the second parameter set.

In the above embodiment, the PPDU bandwidth and the maximum spatial streams in which the frame exchange is performed between the first device and the second device based on the DSO manner are managed by the DSO mode management frame, thereby improving the controllability of the frame exchange based on the DSO manner between the first device and the second device.

An embodiment of a dynamic subchannel operation mode switching and parameter update based on a notification frame is as follows.

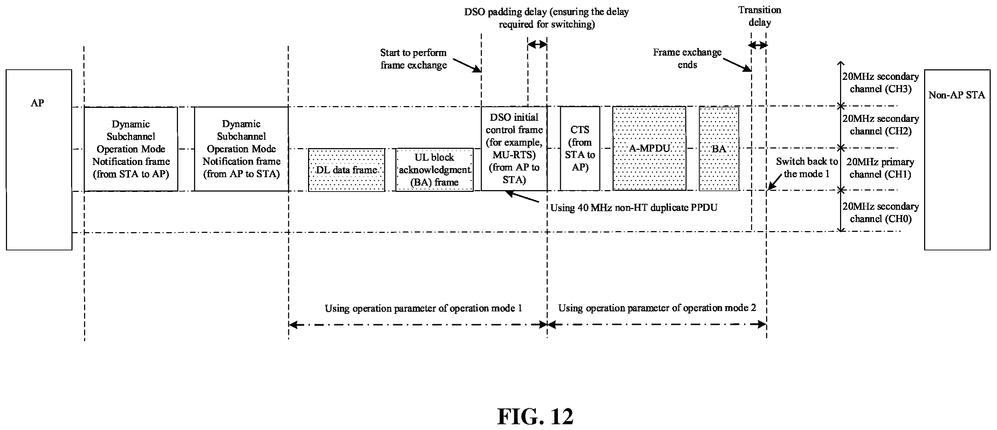

FIG. 12 illustrates a schematic diagram of dynamic subchannel operation mode switching based on a notification frame involved in an embodiment of the present disclosure. As illustrated in FIG. 12, the Non-AP STA is a terminal supporting a 40 MHz bandwidth and is associated with an AP, and the BSS where the AP is located is operated on an 80 MHz bandwidth including one 20 MHz primary channel and three 20 MHz secondary channels. Meanwhile, the AP supports the DSO operation. However, the original operating channel of the Non-AP STA is a 40 MHz primary channel and the operating bandwidth is 40 MHz. The Non-AP STA supports the DSO. When the DSO operation mode is enabled, the Non-AP STA may dynamically switch to a designated channel based on the DSO indication sent by the AP for the frame exchange.

Initially, the Non-AP STA initiates dynamic subchannel operation mode switching, i.e., instructs to enable the DSO, by sending a dynamic subchannel operation mode notification frame (the value of the Dynamic Subchannel Operation Mode is indicated to be 1) to the AP. After receiving the dynamic subchannel operation mode notification frame sent by the Non-AP STA, the AP sends the dynamic subchannel operation mode notification frame to the Non-AP STA within the switching timeout duration indicated by the received dynamic subchannel operation transition timeout subfield. After receiving the dynamic subchannel operation mode notification frame sent by the AP, the Non-AP STA uses the dynamic subchannel operation parameter to perform the DSO operation.

After the DSO operation mode is enabled, the STA dynamically uses the operation functions or capabilities corresponding to two subchannel (or subband) operation parameter sets (which are set as operation parameter set 1 and operation parameter set 2, the operation set 1 is called the initial or default operation parameter set, and the operation parameter set 2 is called the operation parameter set after DSO operation switching) for operation according to the operation parameter indicated in the dynamic subchannel operation mode notification frame. The operation function or capability (for example, the operation subchannel is a 20 MHz primary channel, the maximum bandwidth is 20 MHz, and one transmission spatial stream and one reception spatial stream are supported, etc.) corresponding to the operation parameter set 1 is used to perform the frame exchange during the monitoring operation or when operation switching is not performed. After the DSO operation switching indication is received and it is confirmed that the DSO operation switching is performed, the operation function or capability (for example, the operation subchannel includes a 20 MHz primary channel and one secondary channel, the maximum bandwidth is 40 MHz, and two transmission spatial streams and two reception spatial streams are supported, etc.) corresponding to the operation parameter set 2 is used for operation.

As illustrated in the figure, when acquiring the TXOP in the 20MHz primary channel CH1 and the 20MHz secondary channel CH2, the AP sends a DSO initial control frame (for example, MU-RTS) to the Non-AP STA by using the 40 MHz non-HT duplicate PPDU to, to instruct the Non-AP STA to switch to the corresponding DSO subchannel (i.e., 20 MHz primary channel CH1 and 20 MHz secondary channel CH2). The DSO initial control frame carries a sufficiently long padding delay to ensure the delay required for the Non-AP STA to switch from the operating channel of mode 1 (i.e., 20 MHz primary channel) to the operating channel of mode 2 (i.e., 20 MHz primary channel CH1 and 20 MHz secondary channel CH2). The DSO initial control frame may be transmitted by using a 40 MHz non-HT duplicate PPDU. After receiving the DSO switching indication from the DSO initial control frame, the Non-AP STA switches to the 20 MHz primary channel CH1 and the 20 MHz secondary channel CH2, and replies with a response frame (such as CTS). Next, the AP and the Non-AP STA perform the frame exchange on the operating channel of the mode 2 (i.e., the 20 MHz primary channel CH1 and the 20 MHz secondary channel CH2). When the Non-AP STA detects that the frame exchange is completed, the Non-AP STA switches to the operating channel of mode 1 (i.e., the 20 MHz primary channel) after the DSO transition delay.

Accordingly, if intends to disenable the DSO (or exit the DSO operation) after a period of time, the Non-AP STA may send a Dynamic Subchannel Operation Mode notification frame to the AP (the value of the Dynamic Subchannel Operation Mode is indicated to be 0) to complete the related operation.

Another embodiment of dynamic subchannel operation parameter update based on the notification frame is as follows.

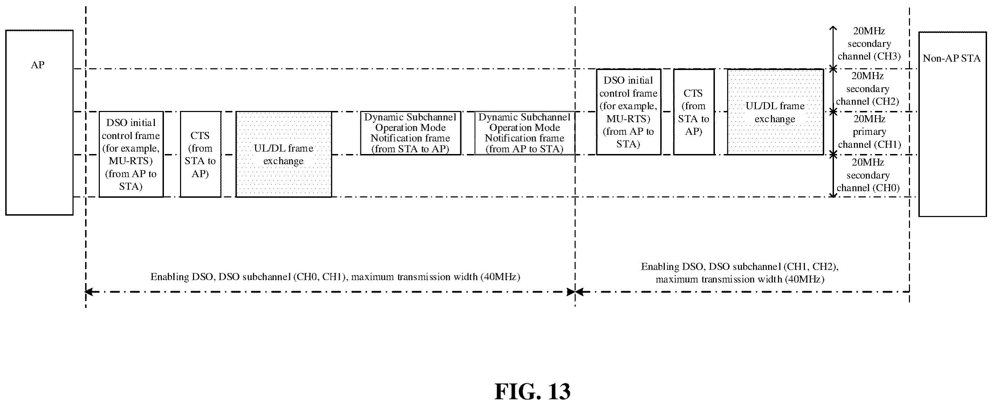

FIG. 13 illustrates a schematic diagram of dynamic subchannel operation parameter update based on the notification frame involved in the embodiment of the present disclosure. As illustrated in FIG. 13, the Non-AP STA is a terminal supporting a 40 MHz bandwidth and is associated with an AP, and the BSS where the AP is located is operated on an 80 MHz bandwidth including one 20 MHz primary channel and three 20 MHz secondary channels. Meanwhile, the AP supports the DSO operation. However, the original operating channel of the Non-AP STA is a 40 MHz primary channel and the operating bandwidth is 40 MHz. Meanwhile, the Non-AP STA supports the DSO. When the DSO operation mode is enabled, the Non-AP STA may dynamically switch to a designated channel based on the DSO indication sent by the AP for the frame exchange.

Initially, the Non-AP STA is in the enabled DSO operation mode, the operating channel of mode 1 is a 20 MHz primary channel and the operating bandwidth is 20 MHz (for example, the bandwidth is reduced for power saving considerations), and the operating channel of mode 2 is a 40 MHz channel (i.e., 20 MHz primary channel CH1 and 20 MHz secondary channel CH0) and the operating bandwidth is 40 MHz.

When the AP acquires the TXOP on the 20MHz primary channel CH1 and the 20MHz secondary channel CH0, the AP uses the 40 MHz non-HT duplicate PPDU to send the DSO initial control frame (for example, MU-RTS) to the Non-AP STA, to instruct the Non-AP STA to switch to the DSO subchannel (i.e., 20 MHz primary channel CH1 and 20 MHz secondary channel CH0). Meanwhile, the DSO initial control frame carries a sufficiently long padding delay to ensure the delay required for the Non-AP STA to switch from the operating channel of mode 1 (i.e., 20 MHz primary channel) to the operating channel of mode 2 (i.e., 20 MHz primary channel CH1 and 20 MHz secondary channel CH0). The DSO initial control frame may be transmitted by using a 40 MHz non-HT duplicate PPDU. After receiving the DSO switching indication from the DSO initial control frame, the Non-AP STA switches to the 20 MHz primary channel CH1 and the 20 MHz secondary channel CH0, and replies with a response frame (such as CTS). Next, the AP and the Non-AP STA perform the frame exchange on the DSO subchannel (i.e., the 20 MHz primary channel CH1 and the 20 MHz secondary channel CH0). When the Non-AP STA detects that the frame exchange is completed, the Non-AP STA switches to the operating channel of mode 1 (i.e., the 20 MHz primary channel) after the DSO transition delay.

After a period of time, the Non-AP STA sends a dynamic subchannel operation mode notification frame to the AP to initiate a dynamic subchannel operation parameter update, that is, it is indicated that DSO is enabled, the operating channel and operating bandwidth of mode 1 remain unchanged, but the operating channel of mode 2 is updated to 20 MHz primary channel CH1 and 20 MHz secondary channel CH2, and the maximum transmission width is still 40 MHz. After the AP receives the dynamic subchannel operation mode notification frame sent by the Non-AP STA, the AP sends the dynamic subchannel operation mode notification frame to the Non-AP STA within the transition timeout duration indicated by the received dynamic subchannel operation transition timeout subfield. After the Non-AP STA receives the dynamic subchannel operation mode notification frame sent by the AP, the Non-AP STA uses the updated dynamic subchannel operation parameter to perform the DSO operation. The Non-AP STA operates on the operating channel of the mode 1 (i.e., the 20 MHz primary channel) or on the operating channel of the mode 2 (including the 20 MHz primary channel CH1 and the 20 MHz secondary channel CH2, a maximum transmission width of 40 MHz).

When the AP acquires the TXOP in the 20MHz primary channel CH1 and the 20MHz secondary channel CH2, the AP uses the 40 MHz non-HT duplicate PPDU to send a DSO initial control frame (for example, MU-RTS) to the Non-AP STA, to instruct the Non-AP STA to switch to the DSO subchannel (i.e., 20 MHz primary channel CH1 and 20 MHz secondary channel CH2). Meanwhile, the DSO initial control frame carries a sufficiently long padding delay to ensure the delay required for the Non-AP STA to switch from the operating channel of the mode 1 (i.e., 20 MHz primary channel) to the operating channel of the mode 2 (i.e., 20 MHz primary channel CH1 and 20 MHz secondary channel CH2). The DSO initial control frame may be transmitted by using a 40 MHz non-HT duplicate PPDU. After the Non-AP STA receives the DSO switching indication from the DSO initial control frame, the Non-AP STA switches to the 20 MHz primary channel CH1 and the 20 MHz secondary channel CH2 of mode 2, and replies with a response frame (for example, CTS). Next, the AP and the Non-AP STA perform the frame exchange on the operating channel of the mode 2 (i.e., the 20 MHz primary channel CH1 and the 20 MHz secondary channel CH2). When the Non-AP STA detects that the frame exchange is completed, the Non-AP STA switches to the operating channel of mode 1 (i.e., the 20 MHz primary channel) after the DSO transition delay.

An embodiment of a dynamic subchannel operation mode and/or parameter update negotiation based on a request/response frame is as follows.

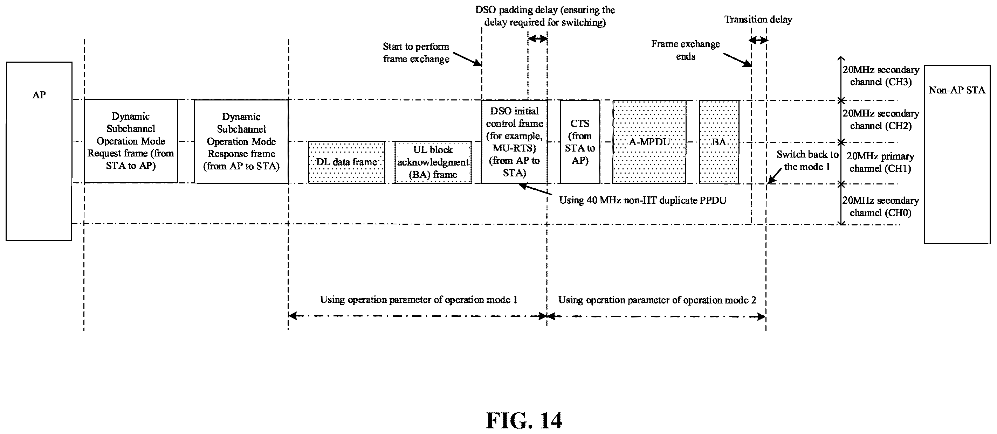

FIG. 14 illustrates a schematic diagram of negotiation of dynamic subchannel operation switching based on a request/response frame involved in an embodiment of the present disclosure. As illustrated in FIG. 14, the Non-AP STA is a terminal supporting a 40 MHz bandwidth and is associated with an AP, and the BSS where the AP is located is operated on an 80 MHz bandwidth including one 20 MHz primary channel and three 20 MHz secondary channels. Meanwhile, the AP supports the DSO operation. However, the original operating channel of the Non-AP STA is a 40 MHz primary channel and the regular operating bandwidth is 40 MHz. The Non-AP STA 2 supports the DSO. When the DSO operation mode is enabled, the Non-AP STA 2 may dynamically switch to a designated channel based on the DSO indication sent by the AP for the frame exchange.

Initially, the Non-AP STA initiates a dynamic subchannel operation mode switching by sending a dynamic subchannel operation mode request frame to the AP, that is, it is indicated that the DSO is enabled. After receiving the dynamic subchannel operation mode request frame sent by the Non-AP STA, the AP replies the dynamic subchannel operation mode response frame to the Non-AP STA. After receiving the dynamic subchannel operation mode notification frame sent by the AP, the Non-AP STA uses the dynamic subchannel operation parameter to perform the DSO operation.

After the DSO operation mode is enabled, the STA dynamically uses the operation functions or capabilities corresponding to two subchannel (or subband) operation parameter sets (which are set as operation parameter set 1 and operation parameter set 2, the operation set 1 is called the initial or default operation parameter set, and operation parameter set 2 is called the operation parameter set after DSO operation switching) for operation. The operation function or capability (for example, the operation subchannel is a 20 MHz primary channel, the maximum bandwidth is 20 MHz, and one transmission spatial stream and one reception spatial stream are supported, etc.) corresponding to the operation parameter set 1 is used to perform the frame exchange during the monitoring operation or when operation switching is not performed. After the DSO operation switching indication is received and it is confirmed that the DSO operation switching is performed, the operation function or capability (for example, the operation subchannel includes a 20 MHz primary channel and one secondary channel, the maximum bandwidth is 40 MHz, and two transmission spatial streams and two reception spatial streams are supported, etc.) corresponding to the operation parameter set 2 is used for operation.

As illustrated in the figure, when acquiring the TXOP in the 20MHz primary channel CH1 and the 20MHz secondary channel CH2, the AP uses the 40 MHz non-HT duplicate PPDU to send a DSO initial control frame (for example, MU-RTS) to the Non-AP STA, to instruct the Non-AP STA to switch to the corresponding DSO subchannel (i.e., 20 MHz primary channel CH1 and 20 MHz secondary channel CH2). The DSO initial control frame carries a sufficiently long padding delay to ensure the delay required for the Non-AP STA to switch from the operating channel of mode 1 (i.e., 20 MHz primary channel) to the operating channel of mode 2 (i.e., 20 MHz primary channel CH1 and 20 MHz secondary channel CH2). The DSO initial control frame may be transmitted by using a 40 MHz non-HT duplicate PPDU. After receiving the DSO switching indication from the DSO initial control frame, the Non-AP STA switches to the 20 MHz primary channel CH1 and the 20 MHz secondary channel CH2, and replies with a response frame (such as CTS). Next, the AP and the Non-AP STA perform the frame exchange on the operating channel of mode 2 (i.e., the 20 MHz primary channel CH1 and the 20 MHz secondary channel CH2). When the Non-AP STA detects that the frame exchange is completed, the Non-AP STA switches to the operating channel of mode 1 (i.e., the 20 MHz primary channel) after the DSO transition delay.

Accordingly, if the Non-AP STA intends to disenable the DSO (or exit the DSO operation) after a period of time, the Non-AP STA may send a Dynamic Subchannel Operation Mode notification frame to the AP (the value of the Dynamic Subchannel Operation Mode is indicated to be 0) to complete the related operation.

Another embodiment of dynamic subchannel operation mode and/or parameter update negotiation based on the request/response frame is as follows.

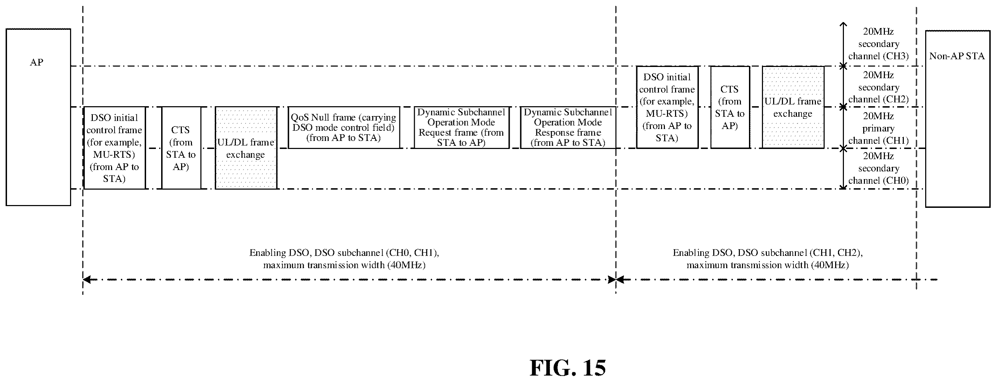

FIG. 15 illustrates a schematic diagram of negotiation of dynamic subchannel operation parameter update based on a request/response frame involved in an embodiment of the present disclosure. As illustrated in FIG. 15, the Non-AP STA is a terminal supporting a 40 MHz bandwidth and is associated with an AP, and the BSS where the AP is located is operated on an 80 MHz bandwidth including one 20 MHz primary channel and three 20 MHz secondary channels. Meanwhile, the AP supports the DSO operation. However, the default operating channel (which is referred to the operating channel for DSO subchannel switching without receiving the DSO initial control frame) of the Non-AP STA is the 20 MHz primary channel and the default operating bandwidth (which is referred to the operating bandwidth for DSO subchannel switching without receiving the DSO initial control frame) is 20 MHz (for example, the bandwidth is reduced for power saving considerations). The Non-AP STA2 supports the DSO, and when the DSO operation mode is enabled, the Non-AP STA2 may dynamically switch to a designated channel based on the DSO indication sent by the AP for the frame exchange.

Initially, the Non-AP STA2 is in the enabled DSO operation mode, the Non-AP STA2 operates on the default channel (i.e., the 20 MHz primary channel) or operates on the DSO subchannel (including the 20 MHz primary channel CH1 and the 20 MHz secondary channel CH0, a maximum transmission width of 40 MHz).

When acquiring the TXOP on the 20 MHz primary channel CH1 and the 20 MHz secondary channel CH0, the AP sends a DSO initial control frame (for example, MU-RTS) to the Non-AP STA, to instruct the Non-AP STA to switch to the DSO subchannel (i.e., the 20 MHz primary channel CH1 and the 20 MHz secondary channel CH0). Meanwhile, the DSO initial control frame carries a sufficiently long padding delay to ensure the delay required for the Non-AP STA to switch from the default channel (i.e., 20 MHz primary channel) to the DSO subchannel (i.e., 20 MHz primary channel CH1 and 20 MHz secondary channel CH0). The DSO initial control frame may be transmitted by using a 40 MHz non-HT duplicate PPDU. After receiving the DSO switching indication from the DSO initial control frame, the Non-AP STA switches to the 20 MHz primary channel CH1 and the 20 MHz secondary channel CH0, and replies with a response frame (such as CTS). Next, the AP and the Non-AP STA perform the frame exchange on the DSO subchannel (i.e., the 20 MHz primary channel CH1 and the 20 MHz secondary channel CH0). When the Non-AP STA detects that the frame exchange is completed, the Non-AP STA switches to the default channel (i.e., the 20 MHz primary channel) after the DSO transition delay.

After a period of time, the AP sends, to the Non-AP STA, a QoS Null frame or other frame carrying the dynamic subchannel operation mode control subfield and the dynamic subchannel operation parameter update subfield in the HE variant HT Control field, to recommend the suggested dynamic subchannel operation mode and dynamic subchannel operation parameter, for example, indicating enabling of the DSO, DSO subchannel (primary channel CH1 and 20 MHz secondary channel CH2), maximum transmission width (i.e. 40 MHz). After receiving the recommended dynamic subchannel operation mode and dynamic subchannel operation parameter, the Non-AP STA initiates dynamic subchannel operation parameter update by sending a dynamic subchannel operation mode request frame to the AP, that is, it is indicated that the DSO is enabled, but the DSO subchannel is updated to 20 MHz primary channel CH1 and 20 MHz secondary channel CH2, a maximum transmission width is 40 MHz. After receiving the dynamic subchannel operation mode request frame sent by the Non-AP STA, the AP replies with the dynamic subchannel operation mode response frame to the Non-AP STA. After receiving the dynamic subchannel operation mode response frame sent by the AP, the Non-AP STA performs the DSO operation by using the updated dynamic subchannel operation parameter. The Non-AP STA operates on a default channel (i.e., a 20 MHz primary channel) or on a DSO subchannel (including a 20 MHz primary channel CH1 and a 20 MHz secondary channel CH2, a maximum transmission width of 40 MHz).

When acquiring the TXOP on the 20 MHz primary channel CH1 and the 20 MHz secondary channel CH2, the AP sends a DSO initial control frame (for example, MU-RTS) to the Non-AP STA, to instruct the Non-AP STA to switch to the DSO subchannel (i.e., the 20 MHz primary channel CH1 and the 20 MHz secondary channel CH0). The DSO initial control frame carries a sufficiently long padding delay to ensure the delay required for the Non-AP STA to switch from the default channel (i.e., 20 MHz primary channel) to the DSO subchannel (i.e., 20 MHz primary channel CH1 and 20 MHz secondary channel CH2). The DSO initial control frame may be transmitted by using a 40 MHz non-HT duplicate PPDU. After receiving the DSO switching indication from the DSO initial control frame, the Non-AP STA switches to the 20 MHz primary channel CH1 and the 20 MHz secondary channel CH2, and replies with a response frame (such as CTS). Next, the AP and the Non-AP STA perform the frame exchange on the DSO sub-channel (i.e., the 20 MHz primary channel CH1 and the 20 MHz secondary channel CH2). When the Non-AP STA detects that the frame exchange is completed, the Non-AP STA switches to the default channel (i.e., the 20 MHz primary channel) after the DSO transition delay.

The solutions shown in the above embodiments of the present disclosure are mainly for dynamic subchannel (or subband) operation (DSO) mode management in one BSS, which may be extended to DSO mode management in a multi-AP or multi-link operation scenario.

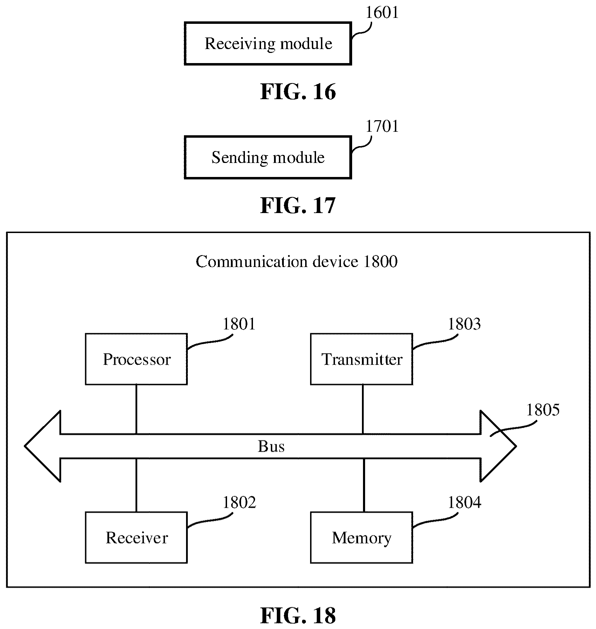

FIG. 16 illustrates a block diagram of a channel operation apparatus according to an embodiment of the present disclosure. The apparatus has a function of implementing the operations performed by the first device in the channel operation method described above. As illustrated in FIG. 16, the apparatus may include a receiving module 1601.

The receiving module 1601 is configured to receive a DSO mode management frame sent by the second device.

The DSO mode management frame is used for indicating that a DSO mode between the first device and the second device is an enabled mode or a disabled mode. The enabled mode is a mode that allows a target device to perform frame exchange according to the first parameter set in a DSO manner. The first parameter set is indicated by the DSO mode management frame, and the first parameter set includes at least one of a channel bandwidth or maximum supported spatial streams.

**In** some embodiments, the disabled mode is a mode that does not allow the target device to perform the frame exchange in the DSO manner.

Alternatively, the disabled mode is a mode that does not allow the target device to perform the frame exchange according to the first parameter set in the DSO manner.

In some embodiments, the target device is one or both of the first device and the second device.

In some embodiments, the apparatus further includes a setting module.

The setting module is configured to set DSO mode information between the first device and the second device according to the DSO mode management frame. The DSO mode information includes at least one of: the DSO mode between the first device and the second device; an operating parameter for DSO control; or a parameter set for performing the frame exchange.

In some embodiments, the DSO mode management frame is a DSO mode notification frame, and the apparatus further includes the first sending module.

The first sending module is configured to return the DSO mode notification frame to the second device within a timeout duration after receiving the DSO mode notification frame.

In some embodiments, the DSO mode management frame is a DSO mode request frame, and the setting module is configured to set the DSO mode information between the first device and the second device according to the DSO mode request frame in a case of determining that the DSO mode information indicated by the DSO mode request frame is accepted.

In some embodiments, the apparatus further includes the second sending module.

The second sending module is configured to return the first DSO mode response frame to the second device. The first DSO mode response frame is used for indicating whether to accept the DSO mode information indicated by the DSO mode request frame.

In some embodiments, the first DSO mode response frame includes the first status code. The first status code is used for indicating whether to accept the DSO mode information indicated by the DSO mode request frame.

In some embodiments, the apparatus further includes the third sending module.

The third sending module is configured to send, to the second device, the second DSO mode response frame that is not triggered by requesting. The second DSO mode response frame is used for indicating recommended DSO mode information.

In some embodiments, the second DSO mode response frame includes the second status code. The second status code is used for indicating that the second DSO mode response frame is used for recommending the DSO mode information.

In some embodiments, the DSO mode management frame includes at least one of a DSO mode control field, a DSO parameter update field, or an operation mode parameter update field.

The DSO mode control field is used for controlling the DSO mode between the first device and the second device.

The DSO parameter update field is used for updating an operating parameter for DSO control between the first device and the second device.

The operation mode parameter update field is used for updating a parameter set for performing the frame exchange between the first device and the second device.

In some embodiments, the second DSO mode response frame includes at least one of a DSO mode control field, a DSO parameter update field, or an operation mode parameter update field.

The DSO mode control field is used for controlling the DSO mode between the first device and the second device.

The DSO parameter update field is used for updating an operating parameter for DSO control between the first device and the second device.

The operation mode parameter update field is used for updating a parameter set for performing the frame exchange between the first device and the second device.

In some embodiments, the operation mode parameter update field includes at least one of an operation mode parameter update control subfield, the first operation mode update parameter subfield, or the second operation mode update parameter subfield.

The operation mode parameter update control subfield is used for indicating whether the first operation mode update parameter subfield and/or the second operation mode update parameter subfield exists.

The first operation mode update parameter subfield is used for indicating the first parameter set.

The second operation mode update parameter subfield is used for indicating the second parameter set. The second parameter set is a parameter set with which the frame exchange is performed between the first device and the second device through a non-DSO manner, and at least one of a channel bandwidth or maximum supported spatial streams in the second parameter set is different from that in the first parameter set.

In some embodiments, the operation mode parameter update control subfield includes at least one of the first indication information or the second indication information.

The first indication information is used for indicating whether the first operation mode update parameter subfield exists.

The second indication information is used for indicating whether the second operation mode update parameter subfield exists.

In some embodiments, the first operation mode update parameter subfield includes at least one of following information in the first parameter set: channel bandwidth, maximum supported reception spatial streams, or maximum supported transmission spatial streams.

In some embodiments, the second operation mode update parameter subfield includes at least one of following information in the second parameter set: the channel bandwidth, maximum supported reception spatial streams, or maximum supported transmission spatial streams.

In some embodiments, the DSO mode control field includes at least one of a DSO mode subfield, a DSO subchannel bitmap subfield, a maximum transmission width subfield, a DSO parameter update control field, an operation mode parameter update indication subfield, or an operation mode parameter update control subfield.

The DSO mode subfield is used for indicating a DSO mode to be switched.

The DSO subchannel bitmap subfield is used for indicating a target subchannel by a bitmap.

The maximum transmission width subfield is used for indicating a maximum PPDU bandwidth allowed for reception or transmission on the target subchannel.

The DSO parameter update control field is used for indicating whether the DSO parameter update field exists in a current frame.

The operation mode parameter update indication subfield is used for indicating whether a parameter set with which the frame exchange is performed between the first device and the second device is updated.

The operation mode parameter update control subfield is used for indicating whether the operation mode parameter update field exists.

In some embodiments, in a case that a parameter value of the operation mode parameter update indication subfield is the first parameter value, the operation mode parameter update indication subfield indicates that the parameter set with which the frame exchange is performed between the first device and the second device is updated.

In a case that the parameter value of the operation mode parameter update indication subfield is the second parameter value, the operation mode parameter update indication subfield indicates that the parameter set with which the frame exchange is performed between the first device and the second device is not updated.

In some embodiments, in a case that a parameter value of the operation mode parameter update control subfield is the third parameter value, the operation mode parameter update control subfield indicates that the operation mode parameter update field exists.

In a case that the parameter value of the operation mode parameter update control subfield is the fourth parameter value, the operation mode parameter update control subfield indicates that the operation mode parameter update field does not exist.

In some embodiments, in a case that a parameter value of the DSO mode subfield is the fifth parameter value, the DSO mode subfield indicates that the DSO mode to be switched is the enabled mode.

In a case that the parameter value of the DSO mode subfield is the sixth parameter value, the DSO mode subfield indicates that the DSO mode to be switched is the disabled mode.

In some embodiments, the DSO parameter update field includes at least one of a dynamic subchannel operation padding delay subfield and a dynamic subchannel operation transition delay subfield.

The dynamic subchannel operation padding delay subfield is used for indicating a minimum medium access control (MAC) padding duration of a channel switching notification frame. The channel switching notification frame is used for triggering the target device to switch to a target subchannel in the DSO manner for performing the frame exchange.

The dynamic subchannel operation transition delay subfield is used for indicating a transition delay for switching from the target subchannel to a regular subchannel.

In some embodiments, in a case that the DSO mode management frame is a DSO mode notification frame, and the DSO parameter update field includes a transition timeout subfield.

The transition timeout subfield is used for indicating a timeout duration for the first device to return the DSO mode notification frame to the second device after receiving the DSO mode notification frame.

In some embodiments, in a case that the first device is a non-access point (non-AP) device and the second device is an AP device, the receiving module is further configured to receive a channel switch indication frame sent by the second device in a case that the DSO mode between the first device and the second device is in the enabled mode.

The apparatus further includes the first switching module. The first switching module is configured to switch to a target subchannel indicated by the DSO mode management frame, and perform the frame exchange with the second device according to the first parameter set.

In some embodiments, the first switching module is further configured to switch to a regular subchannel to perform the frame exchange with the second device within a transition delay indicated by the DSO mode management frame after the frame exchange with the second device on the target subchannel according to the first parameter set is completed.

In some embodiments, the apparatus further includes the first frame exchange module.

The first frame exchange module is configured to perform the frame exchange with the second device on the regular subchannel according to the second parameter set indicated by the DSO mode management frame in a case that the DSO mode between the first device and the second device is in the disabled mode, or in a case that the DSO mode between the first device and the second device is in the enabled mode and the channel switch indication frame sent by the second device is not received, or in a case of switching to the regular subchannel after the frame exchange with the second device on the target subchannel according to the first parameter set is completed.

In some embodiments, in a case that the first device is an AP device and the second device is a non-AP device, the apparatus further includes the fourth sending module and the second frame exchange module.

The fourth sending module is configured to send a channel switch indication frame to the second device in a case that the DSO mode between the first device and the second device is under the enabled mode.

The second frame exchange module is configured to perform the frame exchange with the second device on a target subchannel indicated by the DSO mode management frame according to the first parameter set.

In some embodiments, the second frame exchange module is further configured to perform the frame exchange with the second device on a regular subchannel according to the second parameter set indicated by the DSO mode management frame in a case that the DSO mode between the first device and the second device is in the disabled mode, or in a case that the DSO mode between the first device and the second device is in the enabled mode and the channel switch indication frame is not sent to the second device, or in a case that the frame exchange with the second device on the target subchannel according to the first parameter set is completed.

In some embodiments, a frame end of the channel switch indication frame includes a padding element, and a duration corresponding to the padding element is not less than the minimum MAC padding duration indicated by the DSO mode management frame.

In some embodiments, a PPDU bandwidth with which the frame exchange is performed between the first device and the second device on the target subchannel is not greater than a maximum PPDU bandwidth indicated by a maximum transmission width subfield in the DSO mode management frame.

Alternatively, the PPDU bandwidth with which the frame exchange is performed between the first device and the second device on the target subchannel is not greater than the channel bandwidth in the first parameter set.

In some embodiments, spatial streams received when the frame exchange is performed between the first device and the second device on the target subchannel are not greater than maximum supported reception spatial streams in the first parameter set.

Spatial streams transmitted when the frame exchange is performed between the first device and the second device on the target subchannel are not greater than maximum supported transmission spatial streams in the first parameter set.

In some embodiments, a PPDU bandwidth with which the frame exchange is performed between the first device and the second device on the regular subchannel is not greater than a channel bandwidth in the second parameter set.

In some embodiments, spatial streams received when the frame exchange is performed between the first device and the second device on the regular subchannel is not greater than maximum supported reception spatial streams in the second parameter set.

Spatial streams transmitted when the frame exchange is performed between the first device and the second device on the regular subchannel is not greater than maximum supported transmission spatial streams in the second parameter set.

FIG. 17 illustrates a block diagram of a channel operation apparatus according to an embodiment of the present disclosure. The apparatus has a function of implementing the operations performed by the second device in the channel operation method described above. As illustrated in FIG. 17, the apparatus may include a sending module 1701.

The sending module 1701 is configured to send a DSO mode management frame to the first device.

The DSO mode management frame is used for indicating that a DSO mode between the first device and the second device is an enabled mode or a disabled mode. The enabled mode is a mode that allows a target device to perform frame exchange according to the first parameter set in a DSO manner. The first parameter set is indicated by the DSO mode management frame, and the first parameter set includes at least one of a channel bandwidth or maximum supported spatial streams.

In some embodiments, the disabled mode is a mode that does not allow the target device to perform the frame exchange in the DSO manner.

Alternatively, the disabled mode is a mode that does not allow the target device to perform the frame exchange according to the first parameter set in the DSO manner.

In some embodiments, the target device is one or both of the first device and the second device.

In some embodiments, the apparatus further includes a setting module.

The setting module is configured to set DSO mode information between the first device and the second device according to the DSO mode management frame. The DSO mode information includes at least one of: the DSO mode between the first device and the second device; an operating parameter for DSO control; or a parameter set for performing the frame exchange.

In some embodiments, the setting module is configured to set the DSO mode information between the first device and the second device according to the DSO mode notification frame when the DSO mode notification frame returned by the first device is received within a timeout duration after the DSO mode notification frame being sent.

Alternatively, the setting module is configured to, in a case that the DSO mode notification frame returned by the first device is not received within the timeout duration after the DSO mode notification frame being sent, set the DSO mode information between the first device and the second device according to the DSO mode notification frame after the timeout duration is reached.

The setting module is configured to receive the first DSO mode response frame returned by the first device, and in a case that the first DSO mode response frame is used for indicating that the DSO mode information indicated by the DSO mode request frame is accepted, set the DSO mode information between the first device and the second device according to the DSO mode request frame. The first DSO mode response frame is used for indicating whether the DSO mode information indicated by the DSO mode request frame is accepted.

In some embodiments, the first DSO mode response frame includes the first status code. The first status code is used for indicating whether the DSO mode information indicated by the DSO mode request frame is accepted.

In some embodiments, the apparatus further includes the first receiving module.

The first receiving module is configured to receive the second DSO mode response frame that is not triggered by requesting, sent by the first device. The second DSO mode response frame is used for indicating recommended DSO mode information.

In some embodiments, the sending module 1701 is configured to send the DSO mode request frame to the first device according to the second DSO mode response frame.

In some embodiments, the second DSO mode response frame includes the second status code. The second status code is used for indicating that the second DSO mode response frame is used for recommending the DSO mode information.

In some embodiments, the DSO mode management frame includes at least one of a DSO mode control field, a DSO parameter update field, or an operation mode parameter update field.

The DSO mode control field is used for controlling the DSO mode between the first device and the second device.

The DSO parameter update field is used for updating an operating parameter for DSO control between the first device and the second device.

The operation mode parameter update field is used for updating a parameter set for performing the frame exchange between the first device and the second device.

In some embodiments, the second DSO mode response frame includes at least one of a DSO mode control field, a DSO parameter update field, or an operation mode parameter update field.

The DSO mode control field is used for controlling the DSO mode between the first device and the second device.

The DSO parameter update field is used for updating an operating parameter for DSO control between the first device and the second device.

The operation mode parameter update field is used for updating a parameter set for performing the frame exchange between the first device and the second device.

In some embodiments, the operation mode parameter update field includes at least one of an operation mode parameter update control subfield, the first operation mode update parameter subfield, or the second operation mode update parameter subfield.

The operation mode parameter update control subfield is used for indicating whether the first operation mode update parameter subfield and/or the second operation mode update parameter subfield exists.

The first operation mode update parameter subfield is used for indicating the first parameter set.

The second operation mode update parameter subfield is used for indicating the second parameter set. The second parameter set is a parameter set with which the frame exchange is performed between the first device and the second device through a non-DSO manner, and at least one of a channel bandwidth or maximum supported spatial streams in the second parameter set is different from that in the first parameter set.

In some embodiments, the operation mode parameter update control subfield includes at least one of the first indication information or the second indication information.

The first indication information is used for indicating whether the first operation mode update parameter subfield exists.

The second indication information is used for indicating whether the second operation mode update parameter subfield exists.

In some embodiments, the first operation mode update parameter subfield includes at least one of following information in the first parameter set: the channel bandwidth, maximum supported reception spatial streams, or maximum supported transmission spatial streams.

In some embodiments, the second operation mode update parameter subfield includes at least one of following information in the second parameter set: the channel bandwidth, maximum supported reception spatial streams, or maximum supported transmission spatial streams.

In some embodiments, the DSO mode control field includes at least one of a DSO mode subfield, a DSO subchannel bitmap subfield, a maximum transmission width subfield, a DSO parameter update control field, an operation mode parameter update indication subfield or an operation mode parameter update control subfield.

The DSO mode subfield is used for indicating a DSO mode to be switched.

The DSO subchannel bitmap subfield is used for indicating a target subchannel by a bitmap.

The maximum transmission width subfield is used for indicating a maximum physical layer protocol data unit (PPDU) bandwidth allowed for reception or transmission on the target subchannel.

The DSO parameter update control field is used for indicating whether the DSO parameter update field exists in a current frame.

The operation mode parameter update indication subfield is used for indicating whether a parameter set with which the frame exchange is performed between the first device and the second device is updated.

The operation mode parameter update control subfield is used for indicating whether the operation mode parameter update field exists.

In some embodiments, in a case that a parameter value of the operation mode parameter update indication subfield is the first parameter value, the operation mode parameter update indication subfield indicates that the parameter set with which the frame exchange is performed between the first device and the second device is updated.

In a case that the parameter value of the operation mode parameter update indication subfield is the second parameter value, the operation mode parameter update indication subfield indicates that the parameter set with which the frame exchange is performed between the first device and the second device is not updated.

In some embodiments, in a case that a parameter value of the operation mode parameter update control subfield is the third parameter value, the operation mode parameter update control subfield indicates that the operation mode parameter update field exists.

In a case that the parameter value of the operation mode parameter update control subfield is the fourth parameter value, the operation mode parameter update control subfield indicates that the operation mode parameter update field does not exist.

In some embodiments, in a case that a parameter value of the DSO mode subfield is the fifth parameter value, the DSO mode subfield indicates that the DSO mode to be switched is the enabled mode.

In a case that the parameter value of the DSO mode subfield is the sixth parameter value, the DSO mode subfield indicates that the DSO mode to be switched is the disabled mode.

In some embodiments, the DSO parameter update field includes at least one of a dynamic subchannel operation padding delay subfield or a dynamic subchannel operation transition delay subfield.

The dynamic subchannel operation padding delay subfield is used for indicating a MAC padding duration of a channel switching notification frame, and the channel switching notification frame is used for triggering the target device to switch to a target subchannel in the DSO manner for performing the frame exchange.

The dynamic subchannel operation transition delay subfield is used for indicating a transition delay for switching from the target subchannel to a regular subchannel.

In some embodiments, in a case that the DSO mode management frame is a DSO mode notification frame, the DSO parameter update field includes a transition timeout subfield.

The transition timeout subfield is used for indicating a timeout duration for the first device to return the DSO mode notification frame to the second device after receiving the DSO mode notification frame.

In some embodiments, when the first device is a non-AP device and the second device is an AP device, the sending module 1701 is further configured to send a channel switch indication frame to the first device in a case that the DSO mode between the first device and the second device is in the enabled mode.

The apparatus further includes the first frame exchange module.

The first frame exchange module is configured to perform the frame exchange with the first device on a target subchannel indicated by the DSO mode management frame according to the first parameter set.

In some embodiments, the first frame exchange module is further configured to perform the frame exchange with the first device on a regular subchannel according to a second parameter set indicated by the DSO mode management frame in a case that the DSO mode between the first device and the second device is in the disabled mode, or in a case that the DSO mode between the first device and the second device is in the enabled mode and the channel switch indication frame is not sent to the second device, or in a case that the frame exchange with the second device on the target subchannel according to the first parameter set is completed.

In some embodiments, in a case that the first device is an AP device and the second device is a non-AP device, the apparatus further includes the second receiving module and the first switching module.

The second receiving module is configured to receive a channel switch indication frame sent by the first device in a case that the DSO mode between the first device and the second device is in the enabled mode.

The first switching module is configured to switch to a target subchannel indicated by the DSO mode management frame, and perform the frame exchange with the first device according to the first parameter set.

In some embodiments, the first switching module is further configured to, after the frame exchange with the first device on the target subchannel according to the first parameter set is completed, switch to a regular subchannel to perform the frame exchange with the first device within a transition delay indicated by the DSO mode management frame.

In some embodiments, the apparatus further includes the second frame exchange module.

The second frame exchange module is configured to perform the frame exchange with the first device on the regular subchannel according to the second parameter set indicated by the DSO mode management frame in a case that the DSO mode between the first device and the second device is in the disabled mode, or in a case that the DSO mode between the first device and the second device is in the enabled mode and the channel switch indication frame sent by the second device is not received, or in a case of switching to the regular subchannel after the frame exchange with the second device on the target subchannel according to the first parameter set is completed.

In some embodiments, a frame end of the channel switch indication frame includes a padding element, and a duration corresponding to the padding element is not less than the minimum MAC padding duration indicated by the DSO mode management frame.

In some embodiments, a PPDU bandwidth with which data transmission is performed between the first device and the second device on the target subchannel is not greater than the maximum PPDU bandwidth indicated by the maximum transmission width subfield in the DSO mode management frame.

Alternatively, the PPDU bandwidth with which the frame exchange is performed between the first device and the second device on the target subchannel is not greater than the channel bandwidth in the first parameter set.

In some embodiments, spatial streams received when the frame exchange is performed between the first device and the second device on the target subchannel are not greater than the maximum supported reception spatial streams in the first parameter set.

Spatial streams transmitted when the frame exchange is performed between the first device and the second device on the target subchannel are not greater than maximum supported transmission spatial streams in the first parameter set.

In some embodiments, a PPDU bandwidth with which the frame exchange is performed between the first device and the second device on the regular subchannel is not greater than a channel bandwidth in the second parameter set.

In some embodiments, spatial streams received when the frame exchange is performed between the first device and the second device on the regular subchannel are not greater than the maximum supported reception spatial streams in the second parameter set.

Spatial streams transmitted when the frame exchange is performed between the first device and the second device on the regular subchannel are not greater than the maximum supported transmission spatial streams in the second parameter set.

It should be noted that, when the device provided in the above embodiment realizes its functions, only the division of each functional module described above is illustrated as an example, and in practical application, the functions described above can be allocated by different functional modules according to actual needs, that is, the content structure of the device can be divided into different functional modules to complete all or part of the functions described above.

With regard to the apparatus in the above-described embodiments, the specific manner in which the respective modules perform operations has been described in detail in the embodiments related to the method, and will not be described in detail here.

FIG. 18 illustrates a schematic structural diagram of a communication device 1800 according to an embodiment of the present disclosure. The communication device 1800 may be a multi-link device. The communication device 1800 may include a processor 1801, a receiver 1802, a transmitter 1803, a memory 1804, and a bus 1805.

The processor 1801 includes one or more processing cores, and executes various functional applications and information processing by running software programs and modules.

The receiver 1802 and the transmitter 1803 may be implemented as a communication component, and the communication component may be a communication chip. The communication chip may also be referred to as a transceiver.

The memory 1804 is connected to the processor 1801 via a bus 1805.

The memory 1804 may be configured to store a computer program, and the processor 1801 is configured to execute the computer program to implement various operations performed by the terminal device in the above method embodiments.

Further, the memory 1804 may be implemented by any type of volatile or nonvolatile storage device, including, but not limited to, magnetic or optical disk, electrically erasable programmable read-only memory, erasable programmable read-only memory, static ready-to-access memory, read-only memory, magnetic memory, flash memory, programmable read-only memory, or a combination thereof.

In an exemplary embodiment, the communication device includes a processor, a memory, and a transceiver (the transceiver may include a receiver for receiving information and a transmitter for transmitting information);

In one possible implementation, the processor and the transceiver may be configured to perform all or part of the operations performed by the first device or the second device in any one of the above embodiments of FIG. 4, FIG. 5, or FIG. 6, which will not be repeated here.

Embodiments of the present disclosure further provide a computer readable storage medium, in which a computer program is stored, and the computer program is loaded and executed by a processor to implement various operations performed by the first device or the second device in the method shown in any one of the embodiments of FIG. 4, FIG. 5, or FIG. 6 described above.

The present disclosure further provides a computer program product including computer instructions stored in a computer readable storage medium. The processor of the communication device reads the computer instructions from the computer readable storage medium, and the processor executes the computer instructions to cause the communication device to perform various operations performed by the first device or the second device in the method shown in any one of the embodiments of FIG. 4, FIG. 5, or FIG. 6 described above.

The present disclosure further provides a chip including programmable logic circuitry and/or program instructions. The chip is used for running in a communication device to cause the communication device to perform various operations performed by the first device or the second device in the method shown in any one of the embodiments of FIG. 4, FIG. 5 or FIG. 6 described above.

The present disclosure further provides a computer program executed by a processor of a communication device to implement various operations performed by the first device or the second device in the method shown in any one of the embodiments of FIG. 4, FIG. 5, or FIG. 6 described above.

Those skilled in the art should recognize that in one or more of the examples described above, the functions described in the embodiments of the present disclosure may be implemented in hardware, software, firmware, or any combination thereof. When implemented using software, these functions may be stored in a computer readable medium or transmitted as one or more instructions or code on a computer readable medium. The computer readable medium includes computer storage medium and communication medium. The communication medium includes any medium that facilitates transfer of a computer program from one place to another place. The storage medium may be any available medium accessible by a general-purpose or special-purpose computer.

The above description is only exemplary embodiments of the present disclosure, and is not intended to limit the present disclosure. Any modification, equivalent substitution, improvement, etc. made within the spirit and principles of the present disclosure should be included within the scope of protection of the present disclosure.

## Claims

1. A channel operation method, being performed by a first device, comprising:
receiving a Dynamic subchannel Operation (DSO) mode management frame sent by a second device,
wherein the DSO mode management frame is used for indicating that a DSO mode between the first device and the second device is an enabled mode or a disabled mode, the enabled mode is a mode that allows a target device to perform frame exchange according to a first parameter set in a DSO manner, the first parameter set is indicated by the DSO mode management frame, and the first parameter set comprises at least one of a channel bandwidth or maximum supported spatial streams.

2. The method of claim 1, wherein
the disabled mode is a mode that does not allow the target device to perform the frame exchange in the DSO manner; or
the disabled mode is a mode that does not allow the target device to perform the frame exchange according to the first parameter set in the DSO manner.

3. The method of claim 1 or 2, wherein the target device is one or both of the first device and the second device.

4. The method of any one of claims 1 to 3, further comprising:
setting DSO mode information between the first device and the second device according to the DSO mode management frame, wherein the DSO mode information comprises at least one of:
the DSO mode between the first device and the second device;
an operating parameter for DSO control; or
a parameter set for performing the frame exchange.

5. The method of any one of claims 1 to 4, wherein the DSO mode management frame is a DSO mode notification frame, and the method further comprises:
returning the DSO mode notification frame to the second device within a timeout duration after receiving the DSO mode notification frame.

6. The method of claim 4, wherein the DSO mode management frame is a DSO mode request frame, and setting the DSO mode information between the first device and the second device according to the DSO mode management frame comprises:
in a case of determining that the DSO mode information indicated by the DSO mode request frame is accepted, setting the DSO mode information between the first device and the second device according to the DSO mode request frame.

7. The method of claim 6, further comprising:
returning a first DSO mode response frame to the second device, wherein the first DSO mode response frame is used for indicating whether to accept the DSO mode information indicated by the DSO mode request frame.

8. The method of claim 7, wherein the first DSO mode response frame comprises a first status code, and the first status code is used for indicating whether to accept the DSO mode information indicated by the DSO mode request frame.

9. The method of any one of claims 6 to 8, further comprising:
sending, to the second device, a second DSO mode response frame that is not triggered by requesting, wherein the second DSO mode response frame is used for indicating recommended DSO mode information.

10. The method of claim 9, wherein the second DSO mode response frame comprises a second status code, and the second status code is used for indicating that the second DSO mode response frame is used for recommending the DSO mode information.

11. The method of any one of claims 1 to 10, wherein the DSO mode management frame comprises at least one of a DSO mode control field, a DSO parameter update field, or an operation mode parameter update field,
wherein the DSO mode control field is used for controlling the DSO mode between the first device and the second device;
the DSO parameter update field is used for updating an operating parameter for DSO control between the first device and the second device; and
the operation mode parameter update field is used for updating a parameter set for performing the frame exchange between the first device and the second device.

12. The method of claim 9 or 10, wherein the second DSO mode response frame comprises at least one of a DSO mode control field, a DSO parameter update field, or an operation mode parameter update field,
wherein the DSO mode control field is used for controlling the DSO mode between the first device and the second device;
the DSO parameter update field is used for updating an operating parameter for DSO control between the first device and the second device; and
the operation mode parameter update field is used for updating a parameter set for performing the frame exchange between the first device and the second device.

13. The method of claim 11 or 12, wherein the operation mode parameter update field comprises at least one of an operation mode parameter update control subfield, a first operation mode update parameter subfield, or a second operation mode update parameter subfield,
wherein the operation mode parameter update control subfield is used for indicating whether the first operation mode update parameter subfield and/or the second operation mode update parameter subfield exists;
the first operation mode update parameter subfield is used for indicating the first parameter set; and
the second operation mode update parameter subfield is used for indicating a second parameter set, wherein the second parameter set is a parameter set with which the frame exchange is performed between the first device and the second device through a non-DSO manner, and at least one of a channel bandwidth or maximum supported spatial streams in the second parameter set is different from that in the first parameter set.

14. The method of claim 13, wherein the operation mode parameter update control subfield comprises at least one of first indication information or second indication information,
wherein the first indication information is used for indicating whether the first operation mode update parameter subfield exists; and
the second indication information is used for indicating whether the second operation mode update parameter subfield exists.

15. The method of claim 13 or 14, wherein the first operation mode update parameter subfield comprises at least one of following information in the first parameter set:
the channel bandwidth, maximum supported reception spatial streams, or maximum supported transmission spatial streams.

16. The method of any one of claims 13 to 15, wherein the second operation mode update parameter subfield comprises at least one of following information in the second parameter set:
the channel bandwidth, maximum supported reception spatial streams, or maximum supported transmission spatial streams.

17. The method of any one of claims 11 to 16, wherein the DSO mode control field comprises at least one of a DSO mode subfield, a DSO subchannel bitmap subfield, a maximum transmission width subfield, a DSO parameter update control field, an operation mode parameter update indication subfield or an operation mode parameter update control subfield,
wherein the DSO mode subfield is used for indicating a DSO mode to be switched;
the DSO subchannel bitmap subfield is used for indicating a target subchannel by a bitmap;
the maximum transmission width subfield is used for indicating a maximum physical layer protocol data unit (PPDU) bandwidth allowed for reception or transmission on the target subchannel;
the DSO parameter update control field is used for indicating whether the DSO parameter update field exists in a current frame;
the operation mode parameter update indication subfield is used for indicating whether a parameter set with which the frame exchange is performed between the first device and the second device is updated; and
the operation mode parameter update control subfield is used for indicating whether the operation mode parameter update field exists.

18. The method of claim 17, wherein
in a case that a parameter value of the operation mode parameter update indication subfield is a first parameter value, the operation mode parameter update indication subfield indicates that the parameter set with which the frame exchange is performed between the first device and the second device is updated; and
in a case that the parameter value of the operation mode parameter update indication subfield is a second parameter value, the operation mode parameter update indication subfield indicates that the parameter set with which the frame exchange is performed between the first device and the second device is not updated.

19. The method of claim 17 or 18, wherein
in a case that a parameter value of the operation mode parameter update control subfield is a third parameter value, the operation mode parameter update control subfield indicates that the operation mode parameter update field exists; and
in a case that the parameter value of the operation mode parameter update control subfield is a fourth parameter value, the operation mode parameter update control subfield indicates that the operation mode parameter update field does not exist.

20. The method of any one of claims 17 to 19, wherein
in a case that a parameter value of the DSO mode subfield is a fifth parameter value, the DSO mode subfield indicates that the DSO mode to be switched is the enabled mode; and
in a case that the parameter value of the DSO mode subfield is a sixth parameter value, the DSO mode subfield indicates that the DSO mode to be switched is the disabled mode.

21. The method of any one of claims 11 to 20, wherein the DSO parameter update field comprises at least one of a dynamic subchannel operation padding delay subfield or a dynamic subchannel operation transition delay subfield,
wherein the dynamic subchannel operation padding delay subfield is used for indicating a minimum medium access control (MAC) padding duration of a channel switching notification frame, and the channel switching notification frame is used for triggering the target device to switch to a target subchannel in the DSO manner for performing the frame exchange; and
the dynamic subchannel operation transition delay subfield is used for indicating a transition delay for switching from the target subchannel to a regular subchannel.

22. The method of any one of claims 11 to 21, wherein in a case that the DSO mode management frame is a DSO mode notification frame, the DSO parameter update field comprises a transition timeout subfield; and
the transition timeout subfield is used for indicating a timeout duration for the first device to return the DSO mode notification frame to the second device after receiving the DSO mode notification frame.

23. The method of any one of claims 1 to 22, wherein in a case that the first device is a non-access point (non-AP) device and the second device is an AP device, the method further comprises:
receiving a channel switch indication frame sent by the second device in a case that the DSO mode between the first device and the second device is in the enabled mode; and
switching to a target subchannel indicated by the DSO mode management frame, and performing the frame exchange with the second device according to the first parameter set.

24. The method of claim 23, further comprising:
after the frame exchange with the second device on the target subchannel according to the first parameter set is completed, switching to a regular subchannel to perform the frame exchange with the second device within a transition delay indicated by the DSO mode management frame.

25. The method of claim 24, further comprising:
in a case that the DSO mode between the first device and the second device is in the disabled mode, or in a case that the DSO mode between the first device and the second device is in the enabled mode and the channel switch indication frame sent by the second device is not received, or in a case of switching to the regular subchannel after the frame exchange with the second device on the target subchannel according to the first parameter set is completed,
performing the frame exchange with the second device on the regular subchannel according to a second parameter set indicated by the DSO mode management frame.

26. The method of any one of claims 1 to 22, wherein in a case that the first device is an AP device and the second device is a non-AP device, the method further comprises:
sending a channel switch indication frame to the second device in a case that the DSO mode between the first device and the second device is under the enabled mode; and
performing the frame exchange with the second device on a target subchannel indicated by the DSO mode management frame according to the first parameter set.

27. The method of claim 26, further comprising:
in a case that the DSO mode between the first device and the second device is in the disabled mode, or in a case that the DSO mode between the first device and the second device is in the enabled mode and the channel switch indication frame is not sent to the second device, or in a case that the frame exchange with the second device on the target subchannel according to the first parameter set is completed,
performing the frame exchange with the second device on a regular subchannel according to a second parameter set indicated by the DSO mode management frame.

28. The method of any one of claims 23 to 27, wherein a frame end of the channel switch indication frame comprises a padding element, and a duration corresponding to the padding element is not less than a minimum MAC padding duration indicated by the DSO mode management frame.

29. The method of any one of claims 23 to 28, wherein
a PPDU bandwidth with which the frame exchange is performed between the first device and the second device on the target subchannel is not greater than a maximum PPDU bandwidth indicated by a maximum transmission width subfield in the DSO mode management frame; or
the PPDU bandwidth with which the frame exchange is performed between the first device and the second device on the target subchannel is not greater than the channel bandwidth in the first parameter set.

30. The method of any one of claims 23 to 29, wherein
spatial streams received when the frame exchange is performed between the first device and the second device on the target subchannel are not greater than maximum supported reception spatial streams in the first parameter set;
spatial streams transmitted when the frame exchange is performed between the first device and the second device on the target subchannel are not greater than maximum supported transmission spatial streams in the first parameter set.

31. The method of claim 25 or 27, wherein
a PPDU bandwidth with which the frame exchange is performed between the first device and the second device on the regular subchannel is not greater than a channel bandwidth in the second parameter set.

32. The method of claim 25, 27 or 31, wherein
spatial streams received when the frame exchange is performed between the first device and the second device on the regular subchannel is not greater than maximum supported reception spatial streams in the second parameter set; and
spatial streams transmitted when the frame exchange is performed between the first device and the second device on the regular subchannel is not greater than maximum supported transmission spatial streams in the second parameter set.

33. A channel operation method, being performed by a second device, comprising:
sending a Dynamic subchannel Operation (DSO) mode management frame to a first device,
wherein the DSO mode management frame is used for indicating that a DSO mode between the first device and the second device is an enabled mode or a disabled mode, the enabled mode is a mode that allows a target device to perform frame exchange according to a first parameter set in a DSO manner, the first parameter set is indicated by the DSO mode management frame, and the first parameter set comprises at least one of a channel bandwidth or maximum supported spatial streams.

34. The method of claim 33, wherein
the disabled mode is a mode that does not allow the target device to perform the frame exchange in the DSO manner; or
the disabled mode is a mode that does not allow the target device to perform the frame exchange according to the first parameter set in the DSO manner.

35. The method of claim 33 or 34, wherein the target device is one or both of the first device and the second device.

36. The method of any one of claims 33 to 35, further comprising:
setting DSO mode information between the first device and the second device according to the DSO mode management frame, wherein the DSO mode information comprises at least one of:
the DSO mode between the first device and the second device;
an operating parameter for DSO control; or
a parameter set for performing the frame exchange.

37. The method of claim 36, wherein the DSO mode management frame is a DSO mode notification frame, and setting the DSO mode information between the first device and the second device according to the DSO mode management frame comprises:
when the DSO mode notification frame returned by the first device is received within a timeout duration after the DSO mode notification frame being sent, setting the DSO mode information between the first device and the second device according to the DSO mode notification frame; or
in a case that the DSO mode notification frame returned by the first device is not received within the timeout duration after the DSO mode notification frame being sent, after the timeout duration is reached, setting the DSO mode information between the first device and the second device according to the DSO mode notification frame.

38. The method of claim 36, wherein the DSO mode management frame is a DSO mode request frame, and setting the DSO mode information between the first device and the second device according to the DSO mode management frame comprises:
receiving a first DSO mode response frame returned by the first device, wherein the first DSO mode response frame is used for indicating whether the DSO mode information indicated by the DSO mode request frame is accepted; and
in a case that the first DSO mode response frame is used for indicating that the DSO mode information indicated by the DSO mode request frame is accepted, setting the DSO mode information between the first device and the second device according to the DSO mode request frame.

39. The method of claim 38, wherein the first DSO mode response frame comprises a first status code, and the first status code is used for indicating whether the DSO mode information indicated by the DSO mode request frame is accepted.

40. The method of claim 38 or 39, further comprising:
receiving a second DSO mode response frame that is not triggered by requesting, sent by the first device, wherein the second DSO mode response frame is used for indicating recommended DSO mode information.

41. The method of claim 40, wherein sending the DSO mode management frame to the first device comprises:
sending the DSO mode request frame to the first device according to the second DSO mode response frame.

42. The method of claim 40 or 41, wherein the second DSO mode response frame comprises a second status code, and the second status code is used for indicating that the second DSO mode response frame is used for recommending the DSO mode information.

43. The method of any one of claims 33 to 42, wherein the DSO mode management frame comprises at least one of a DSO mode control field, a DSO parameter update field, or an operation mode parameter update field,
wherein the DSO mode control field is used for controlling the DSO mode between the first device and the second device;
the DSO parameter update field is used for updating an operating parameter for DSO control between the first device and the second device; and
the operation mode parameter update field is used for updating a parameter set for performing the frame exchange between the first device and the second device.

44. The method of claim 41 or 42, wherein the second DSO mode response frame comprises at least one of a DSO mode control field, a DSO parameter update field, or an operation mode parameter update field,
wherein the DSO mode control field is used for controlling the DSO mode between the first device and the second device;
the DSO parameter update field is used for updating an operating parameter for DSO control between the first device and the second device; and
the operation mode parameter update field is used for updating a parameter set for performing the frame exchange between the first device and the second device.

45. The method of claim 43 or 44, wherein the operation mode parameter update field comprises at least one of an operation mode parameter update control subfield, a first operation mode update parameter subfield, or a second operation mode update parameter subfield,
wherein the operation mode parameter update control subfield is used for indicating whether the first operation mode update parameter subfield and/or the second operation mode update parameter subfield exists;
the first operation mode update parameter subfield is used for indicating the first parameter set; and
the second operation mode update parameter subfield is used for indicating a second parameter set, wherein the second parameter set is a parameter set with which the frame exchange is performed between the first device and the second device through a non-DSO manner, and at least one of a channel bandwidth or maximum supported spatial streams in the second parameter set is different from that in the first parameter set.

46. The method of claim 45, wherein the operation mode parameter update control subfield comprises at least one of first indication information or second indication information,
wherein the first indication information is used for indicating whether the first operation mode update parameter subfield exists; and
the second indication information is used for indicating whether the second operation mode update parameter subfield exists.

47. The method of claim 45 or 46, wherein the first operation mode update parameter subfield comprises at least one of following information in the first parameter set:
the channel bandwidth, maximum supported reception spatial streams, or maximum supported transmission spatial streams.

48. The method of any one of claims 45 to 47, wherein the second operation mode update parameter subfield comprises at least one of following information in the second parameter set:
the channel bandwidth, maximum supported reception spatial streams, or maximum supported transmission spatial streams.

49. The method of any one of claims 43 to 48, wherein the DSO mode control field comprises at least one of a DSO mode subfield, a DSO subchannel bitmap subfield, a maximum transmission width subfield, a DSO parameter update control field, an operation mode parameter update indication subfield or an operation mode parameter update control subfield,
wherein the DSO mode subfield is used for indicating a DSO mode to be switched;
the DSO subchannel bitmap subfield is used for indicating a target subchannel by a bitmap;
the maximum transmission width subfield is used for indicating a maximum physical layer protocol data unit (PPDU) bandwidth allowed for reception or transmission on the target subchannel;
the DSO parameter update control field is used for indicating whether the DSO parameter update field exists in a current frame;
the operation mode parameter update indication subfield is used for indicating whether a parameter set with which the frame exchange is performed between the first device and the second device is updated; and
the operation mode parameter update control subfield is used for indicating whether the operation mode parameter update field exists.

50. The method of claim 49, wherein
in a case that a parameter value of the operation mode parameter update indication subfield is a first parameter value, the operation mode parameter update indication subfield indicates that the parameter set with which the frame exchange is performed between the first device and the second device is updated; and
in a case that the parameter value of the operation mode parameter update indication subfield is a second parameter value, the operation mode parameter update indication subfield indicates that the parameter set with which the frame exchange is performed between the first device and the second device is not updated.

51. The method of claim 49 or 50, wherein
in a case that a parameter value of the operation mode parameter update control subfield is a third parameter value, the operation mode parameter update control subfield indicates that the operation mode parameter update field exists; and
in a case that the parameter value of the operation mode parameter update control subfield is a fourth parameter value, the operation mode parameter update control subfield indicates that the operation mode parameter update field does not exist.

52. The method of any one of claims 49 to 51, wherein
in a case that a parameter value of the DSO mode subfield is a fifth parameter value, the DSO mode subfield indicates that the DSO mode to be switched is the enabled mode; and
in a case that the parameter value of the DSO mode subfield is a sixth parameter value, the DSO mode subfield indicates that the DSO mode to be switched is the disabled mode.

53. The method of any one of claims 43 to 52, wherein the DSO parameter update field comprises at least one of a dynamic subchannel operation padding delay subfield or a dynamic subchannel operation transition delay subfield,
wherein the dynamic subchannel operation padding delay subfield is used for indicating a minimum medium access control (MAC) padding duration of a channel switching notification frame, and the channel switching notification frame is used for triggering the target device to switch to a target subchannel in the DSO manner for performing the frame exchange; and
the dynamic subchannel operation transition delay subfield is used for indicating a transition delay for switching from the target subchannel to a regular subchannel.

54. The method of any one of claims 43 to 53, wherein in a case that the DSO mode management frame is a DSO mode notification frame, the DSO parameter update field comprises a transition timeout subfield; and
the transition timeout subfield is used for indicating a timeout duration for the first device to return the DSO mode notification frame to the second device after receiving the DSO mode notification frame.

55. The method of any one of claims 33 to 54, wherein in a case that the first device is a non-access point (non-AP) device and the second device is an AP device, the method further comprises:
sending a channel switch indication frame to the first device in a case that the DSO mode between the first device and the second device is in the enabled mode;
performing the frame exchange with the first device on a target subchannel indicated by the DSO mode management frame according to the first parameter set.

56. The method of claim 55, further comprising:
in a case that the DSO mode between the first device and the second device is in the disabled mode, or in a case that the DSO mode between the first device and the second device is in the enabled mode and the channel switch indication frame is not sent to the second device, or in a case that the frame exchange with the second device on the target subchannel according to the first parameter set is completed,
performing the frame exchange with the first device on a regular subchannel according to a second parameter set indicated by the DSO mode management frame.

57. The method of any one of claims 33 to 54, wherein in a case that the first device is an AP device and the second device is a non-AP device, the method further comprises:
receiving a channel switch indication frame sent by the first device in a case that the DSO mode between the first device and the second device is in the enabled mode; and
switching to a target subchannel indicated by the DSO mode management frame, and performing the frame exchange with the first device according to the first parameter set.

58. The method of claim 57, further comprising:
after the frame exchange with the first device on the target subchannel according to the first parameter set is completed, switching to a regular subchannel to perform the frame exchange with the first device within a transition delay indicated by the DSO mode management frame.

59. The method of claim 58, further comprising:
in a case that the DSO mode between the first device and the second device is in the disabled mode, or in a case that the DSO mode between the first device and the second device is in the enabled mode and the channel switch indication frame sent by the second device is not received, or in a case of switching to the regular subchannel after the frame exchange with the second device on the target subchannel according to the first parameter set is completed,
performing the frame exchange with the first device on the regular subchannel according to a second parameter set indicated by the DSO mode management frame.

60. The method of any one of claims 55 to 59, wherein a frame end of the channel switch indication frame comprises a padding element, and a duration corresponding to the padding element is not less than a minimum MAC padding duration indicated by the DSO mode management frame.

61. The method of any one of claims 55 to 60, wherein
a PPDU bandwidth with which data transmission is performed between the first device and the second device on the target subchannel is not greater than a maximum PPDU bandwidth indicated by a maximum transmission width subfield in the DSO mode management frame; or
the PPDU bandwidth with which the frame exchange is performed between the first device and the second device on the target subchannel is not greater than the channel bandwidth in the first parameter set.

62. The method of any one of claims 55 to 61, wherein
spatial streams received when the frame exchange is performed between the first device and the second device on the target subchannel are not greater than maximum supported reception spatial streams in the first parameter set;
spatial streams transmitted when the frame exchange is performed between the first device and the second device on the target subchannel are not greater than maximum supported transmission spatial streams in the first parameter set.

63. The method of claim 56 or 59, wherein
a PPDU bandwidth with which the frame exchange is performed between the first device and the second device on the regular subchannel is not greater than a channel bandwidth in the second parameter set.

64. The method of claim 56, 59 or 63, wherein
spatial streams received when the frame exchange is performed between the first device and the second device on the regular subchannel are not greater than maximum supported reception spatial streams in the second parameter set; and
spatial streams transmitted when the frame exchange is performed between the first device and the second device on the regular subchannel are not greater than maximum supported transmission spatial streams in the second parameter set.

65. A channel operating apparatus comprising:
a receiving module, configured to receive a Dynamic subchannel Operation (DSO) mode management frame sent by a second device,
wherein the DSO mode management frame is used for indicating that a DSO mode between the first device and the second device is an enabled mode or a disabled mode, the enabled mode is a mode that allows a target device to perform frame exchange according to a first parameter set in a DSO manner, the first parameter set is indicated by the DSO mode management frame, and the first parameter set comprises at least one of a channel bandwidth or maximum supported spatial streams.

66. A channel operation apparatus comprising:
a sending module, configured to send a Dynamic subchannel operation (DSO) mode management frame to a first device,
wherein the DSO mode management frame is used for indicating that a DSO mode between the first device and the second device is an enabled mode or a disabled mode, the enabled mode is a mode that allows a target device to perform frame exchange according to a first parameter set in a DSO manner, the first parameter set is indicated by the DSO mode management frame, and the first parameter set comprises at least one of a channel bandwidth or maximum supported spatial streams.

67. A communication device, implemented as a first device, comprising a processor, a memory and a transceiver,
wherein the transceiver is configured to receive a Dynamic subchannel Operation (DSO) mode management frame sent by a second device,
wherein the DSO mode management frame is used for indicating that a DSO mode between the first device and the second device is an enabled mode or a disabled mode, the enabled mode is a mode that allows a target device to perform frame exchange according to a first parameter set in a DSO manner, the first parameter set is indicated by the DSO mode management frame, and the first parameter set comprises at least one of a channel bandwidth or maximum supported spatial streams.

68. A communication device, implemented as a second device, comprising a processor, a memory and a transceiver,
wherein the transceiver is configured to send a Dynamic subchannel Operation (DSO) mode management frame to a first device,
wherein the DSO mode management frame is used for indicating that a DSO mode between the first device and the second device is an enabled mode or a disabled mode, the enabled mode is a mode that allows a target device to perform frame exchange according to a first parameter set in a DSO manner, the first parameter set is indicated by the DSO mode management frame, and the first parameter set comprises at least one of a channel bandwidth or maximum supported spatial streams.

69. A computer readable storage medium, having stored therein a computer program for execution by a processor to implement the channel operation method of any one of claims 1 to 64.

70. A chip, for operation in a communication device to cause the communication device to perform the channel operation method of any one of claims 1 to 64.

71. A computer program product, comprising computer instructions stored in a computer readable storage medium, wherein a processor of a communication device reads the computer instructions from the computer readable storage medium and executes the computer instructions to cause the communication device to perform the channel operation method of any one of claims 1 to 64.

72. A computer program, executed by a processor of a communication device to implement the channel operation method of any one of claims 1 to 64.
